# EUROPEAN PATENT SPECIFICATION

(11) **EP 2 908 539 B1**
(45) Date of publication and mention of the grant of the patent: **18.12.2019**
(21) Application number: 13846103.3
(22) Date of filing: 30.09.2013
(51) Int. Cl.: H04N 21/435, H04N 21/235, H04N 21/2362, H04N 21/434, H04N 21/81, H04N 21/6543, H04H 20/91, H04N 21/236, H04N 21/462, H04H 20/16, H04H 60/13

(54) **RECEPTION DEVICE, RECEPTION METHOD, TRANSMISSION DEVICE, TRANSMISSION METHOD, AND PROGRAM**
EMPFANGSVORRICHTUNG UND EMPFANGSVERFAHREN SOWIE ÜBERTRAGUNGSVORRICHTUNG UND ÜBERTRAGUNGSVERFAHREN
DISPOSITIF DE RÉCEPTION, MÉTHODE DE RÉCEPTION, DISPOSITIF DE TRANSMISSION, MÉTHODE DE TRANSMISSION ET PROGRAMME

(30) Priority: 10.10.2012 JP 2012225117
(43) Date of publication of application: 19.08.2015
(73) Proprietor: Saturn Licensing LLC, New York, NY 10022-3211 (US)
(72) Inventor: KITAZATO Naohisa, Tokyo 108-0075 (JP)
(74) Representative: Witte, Weller & Partner Patentanwälte mbB
(86) International application number: PCT/JP2013/076487
(87) International publication number: WO 2014/057833

(56) References cited:
- EP-A2- 1 365 587
- WO-A1-2005/036554
- WO-A1-2012/102133
- JP-A- 2011 155 317
- "Hybrid Broadcast Broadband TV", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. BROADCAS, no. V1.1.1, 1 June 2010 (2010-06-01), XP014047139,
- ANONYMOUS: "ARIB TECHNICAL REPORT, ARIB TR-B14 Version 2.8, OPERATIONAL GUIDELINES FOR DIGITAL TERRESTRIAL TELEVISION BROADCASTING, Volume 1 (1/2)", NOT KNOWN,, 29 May 2008 (2008-05-29), XP030001562,

## Description

### TECHNICAL FIELD

The present technology relates to receiving devices, receiving methods, transmitting devices, transmitting methods, and programs, and more particularly, to a receiving device, a receiving method, a transmitting device, a transmitting method, and a program that are capable of providing an application program to be executed in conjunction with AV content in hybrid broadcasting.

### BACKGROUND ART

In recent years, data broadcasting in the BML (Broadcast Markup Language) format has been widely spread since digital television broadcasting started. At present, almost all receivers such as television receivers are compatible with digital television broadcasting.

Also, introduction of so-called hybrid broadcasting is being considered. In hybrid broadcasting, a predetermined server in the Internet is accessed by using not only broadcast waves but also communications, and an application program to be executed in conjunction with AV content such as a broadcast show is acquired (see Patent Document 1, for example).

In "Hybrid Broadcast Broadband TV", technical specification, European Telecommunications Standards Institute, 650, vol. Broadcas, no. V1.1.1, June 1, 2010, XP014047139, a platform for signaling, transport, and presentation of enhanced and interactive applications designed for running on hybrid terminals that include both a DVB-compliant broadcast connection and a broadband connection to the internet are defined.

In WO 2012/102133 A1 a reception device, reception method, supply device, supply method, program and broadcast system are presented, which are able, in lockstep with the progression of programming being received, to control the operation of an external device connected to the reception device. When the application control type of an application control descriptor is 2, the reception device receives command information contained in a digital broadcast signal, and in accordance with the received command information, performs acquisition, launching, and the like of a new information service application. Additionally, if an external device is designated as a command-applying device, the reception device generates a command for the external device and outputs the command to the external device. The external device, in accordance with the command from the reception device, performs acquisition, launching and the like of the new information service application.

In "ARIB Technical Report, ARIB TR-B14 Version 2.8, Operational Guidelines for Digital Terrestrial Television Broadcasting, Volume 1(1/2)", May 29, 2008, XP030001562, provisions for general operations at broadcasting stations for digital terrestrial television broadcasting and functional specifications for digital terrestrial television receiver units are disclosed.

### CITATION LIST

### PATENT DOCUMENT

Patent Document 1: JP 2011-66556 A

### SUMMARY OF THE INVENTION

### PROBLEMS TO BE SOLVED BY THE INVENTION

From the standpoint of a viewer of a broadcast show, data broadcasting and hybrid broadcasting are the same in providing an application program to be executed in conjunction with AV content.

Data broadcasting can be performed without a connection to the Internet, and is to realize a relatively simple function. On the other hand, hybrid broadcasting needs a connection to the Internet, and is to realize a relatively sophisticated function. It is predicted that those broadcasting systems will coexist and be used for respective purposes in the future.

In today's hybrid broadcasting, however, there is no established technical method for providing an application program to be executed in conjunction with AV content such as a broadcast show.

The present technology has been developed in view of those circumstances, and is to provide an application program to be executed in conjunction with AV content in hybrid broadcasting.

### SOLUTIONS TO PROBLEMS

A receiving device of a first aspect of the present technology is defined in claim 1. The device includes: a receiving unit that receives AV content; a control information acquiring unit that acquires control information for controlling an operation of an application program to be executed in conjunction with the AV content; and a control unit that ends the application program being executed based on duration range information for specifying a range on a time axis, the duration range information being contained in the control information, the operation of the application program being continuable in the range.

The AV content is transmitted by a broadcast wave, and the duration range information is information for designating a predetermined event that can specify the duration range of the operation of the application program, the information being contained in predetermined information transmitted by the broadcast wave.

The control unit causes the operation of the application program to continue in accordance with the designated event when the broadcast show of the AV content is of a single broadcast show.

The control unit ends execution of the application program when the value of the "event_id" contained in the EIT (Event Information Table) transmitted by the broadcast wave is updated.

The control unit causes the operation of the application program to continue in accordance with the designated event when the data broadcast performed in conjunction with the AV content is of a single data broadcast.

The control unit ends execution of the application program when the value of the "data_event_id" contained in the DII (Download Info Indication) transmitted by a data carousel transmission designated by the duration range information among one or more data carousel transmissions by the broadcast wave.

The control unit ends execution of the application program when the duration range information is not designated and there is an instruction to end execution of the application program, another application program different from the application program being executed is started, or the broadcast show of the AV content is switched to another broadcast show.

The control information is delivered via a network or is transmitted by the broadcast wave.

The control unit causes the application program to be executed when the receiving device has a function to execute the application program and is connectable to a network.

The application program is started from a data broadcast application program to be executed in conjunction with the AV content.

The receiving device may be an independent device, or may be an internal block of one device.

A receiving method or a program of the first aspect of the present technology is a receiving method or a program that is compatible with the receiving device of the first aspect of the present technology.

In the receiving device, the receiving method, and the program of the first aspect of the present technology, AV content is received, control information for controlling an operation of an application program to be executed in conjunction with the AV content is acquired, and the application program being executed is ended based on duration range information for specifying a range on a time axis, the duration range information being contained in the control information, the operation of the application program being continuable in the range.

A transmitting device of a second aspect of the present technology is defined in claim 9. The device includes: a generating unit that generates control information for controlling an operation of an application program to be executed in conjunction with AV content, the control information containing duration range information for specifying a range on a time axis, the operation of the application program being continuable in the range; and a transmitting unit that transmits the control information.

The transmitting device may be an independent device, or may be an internal block of one device.

A transmitting method or a program of the second aspect of the present technology is a transmitting method or a program that is compatible with the transmitting device of the second aspect of the present technology.

In the transmitting device, the transmitting method, and the program of the second aspect of the present technology, control information for controlling an operation of an application program to be executed in conjunction with AV content is generated, and the control information is transmitted, the control information containing duration range information for specifying a range on a time axis, the operation of the application program being continuable in the range.

### EFFECTS OF THE INVENTION

According to the first aspect and the second aspect of the present technology, an application program to be executed in conjunction with AV content in hybrid broadcasting can be provided.

### BRIEF DESCRIPTION OF DRAWINGS

Fig. 1 is a diagram showing an example structure of a broadcast-communication hybrid system.
Fig. 2 is a diagram showing an example structure of a transmitting device.
Fig. 3 is a diagram showing an example structure of a receiving device.
Fig. 4 is a diagram showing an example functional structure of a control unit.
Fig. 5 is a diagram showing an example structure of an XML-AIT server.
Fig. 6 is a diagram for explaining the outline of data transmission by a data carousel transmission.
Fig. 7 is a diagram showing the structure of a DSM-CC section for transmission of a DDB or DII message.
Fig. 8 is a diagram specifically showing the structure of an XML-AIT.
Fig. 9 is a diagram showing an example description of an XML-AIT (application_time_scope: none).
Fig. 10 is a diagram showing an example description of an XML-AIT (application_time_scope: event).
Fig. 11 is a diagram showing an example description of an XML-AIT (application_time_scope: data_event).
Fig. 12 is a diagram showing the structure of an EIT.
Fig. 13 is a diagram showing an example of an operation sequence.
Fig. 14 is a flowchart for explaining a transmitting operation.
Fig. 15 is a flowchart for explaining a receiving operation.
Fig. 16 is a flowchart for explaining a data broadcast compatible operation.
Fig. 17 is a diagram showing example transitions of screens in a case where data broadcasting and hybrid broadcasting are used at the same time.
Fig. 18 is a flowchart for explaining an XML-AIT delivering operation.
Fig. 19 is a diagram showing an example structure of a broadcast-communication hybrid system.
Fig. 20 is a diagram for explaining a method of acquiring a document and an XML-AIT transmitted by a data carousel transmission.
Fig. 21 is a diagram for explaining a method of acquiring an AIT and a linked application.
Fig. 22 is a diagram showing an example structure of a computer.

### MODE FOR CARRYING OUT THE INVENTION

The following is a description of embodiments of the present technology, with reference to the accompanying drawings.

### <First Embodiment>

### <Example Structure of a Broadcast-Communication Hybrid System>

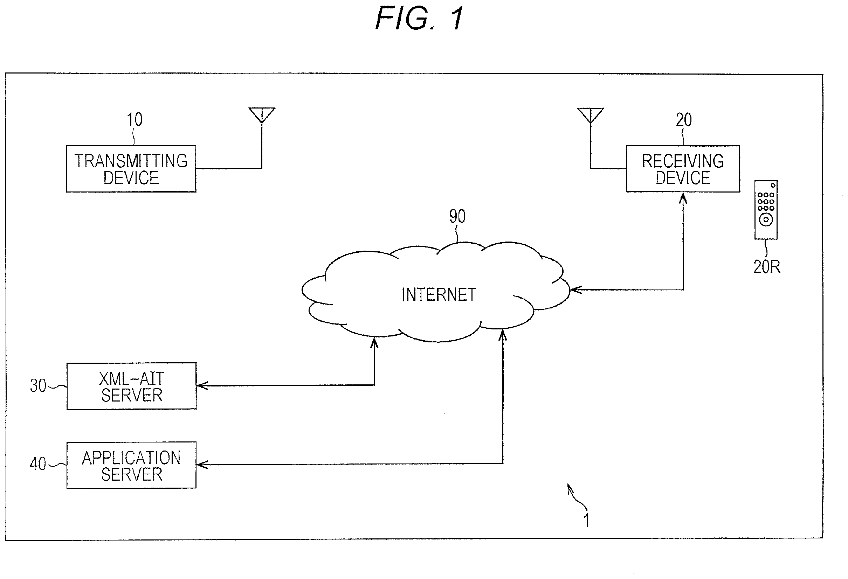

Fig. 1 is a diagram showing an example structure of a broadcast-communication hybrid system 1. This broadcast-communication hybrid system 1 includes a transmitting device 10, a receiving device 20, an XML-AIT server 30, and an application server 40.

The receiving device 20, the XML-AIT server 30, and the application server 40 are connected to one another via the Internet 90.

The transmitting device 10 transmits broadcast content such as a broadcast show or a commercial message in the form of digital television broadcast signals (hereinafter referred to simply as broadcast signals).

The transmitting device 10 transmits a data broadcast application by a data carousel transmission. Here, a data broadcast application is a data broadcast application program formed with a BML document written in BML (Broadcast Markup Language), for example. A data broadcast application is also referred to as data broadcast content.

The receiving device 20 is a receiver such as a television receiver. The receiving device 20 receives broadcast signals transmitted from the transmitting device 10, and acquires video images and sound of broadcast content. The receiving device 20 displays the acquired video images on a display, and outputs the sound corresponding to the video images from a speaker.

The receiving device 20 receives commands as infrared rays from a remote controller 20R in accordance with user operations, and, in accordance with the commands, performs various operations such as channel switching.

A d-button that is used at the time of data broadcast viewing is provided on the remote controller 20R, and the receiving device 20 displays a video image of a data broadcast application in accordance with a d-button operation. Data broadcast viewing may be designated not only by operating the remote controller 20R but also by operating a GUI (Graphical User Interface) on the screen of the display.

In response to a request from the receiving device 20, the XML-AIT server 30 provides an XML-AIT to the receiving device 20 via the Internet 90. The XML-AIT server 30 is managed by a broadcasting organization or the like.

Here, an XML-AIT is an AIT (Application Information Table) written in the XML (Extensible Markup Language) format. An AIT is application control information for controlling the later described operation of a linked application. For example, a control command such as "Auto Start", and information such as the URL (Uniform Resource Locator) of the application server 40 are written in the AIT.

In response to a request from the receiving device 20, the application server 40 provides a linked application to the receiving device 20 via the Internet 90. The application server 40 is managed by a broadcasting organization or the like.

Here, a linked application is an application program to be executed in conjunction with broadcast content. A linked application is formed with an HTML document written in HTML ((Hyper Text Markup Language), for example. A linked application is also referred to as Internet-linked content.

The receiving device 20 accesses the XML-AIT server 30 via the Internet 90, to acquire an XML-AIT. Based on the XML-AIT, the receiving device 20 acquires a linked application set to be automatically executed from the application server 40, and executes the linked application on the spot, for example.

When streaming of communication content is designated, the receiving device 20 can access a delivery server (not shown) provided in the Internet 90 and perform streaming of communication content delivered from the delivery server. In this case, the linked application can also be executed in conjunction with the communication content. The communication content is an aired broadcast show, a released movie, an original video show, or the like that is delivered by VOD (Video On Demand).

Although Fig. 1 shows only one receiving device 20 for ease of explanation, the broadcast-communication hybrid system 1 in practice includes more than one receiving device 20, and each of the receiving devices 20 receives broadcast content from the transmitting device 10.

Likewise, although Fig. 1 shows one XML-AIT server 30 and one application server 40, more than one XML-AIT server 30 and more than one application server 40 are provided for each broadcasting organization in practice. In accordance with information designated by an XML-AIT or the like, each receiving device 20 accesses one of those servers.

The broadcast-communication hybrid system 1 has the above described structure.

### <Example Structure of a Transmitting Device>

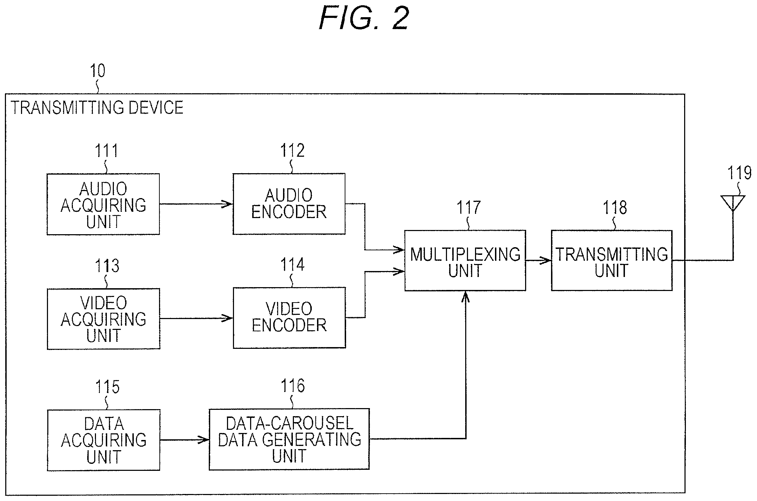

Fig. 2 shows an example structure of the transmitting device 10 shown in Fig. 1.

As shown in Fig. 2, the transmitting device 10 includes an audio acquiring unit 111, an audio encoder 112, a video acquiring unit 113, a video encoder 114, a data acquiring unit 115, a data-carousel data generating unit 116, a multiplexing unit 117, and a transmitting unit 118.

The audio acquiring unit 111 acquires an audio signal of broadcast content from an external server, microphone, or recording medium, and supplies the audio signal to the audio encoder 112.

The audio encoder 112 encodes the audio signal supplied from the audio acquiring unit 111 by an encoding method such as MPEG (Moving Picture Experts Group) 2, and supplies the resultant audio stream to the multiplexing unit 117.

The video acquiring unit 113 acquires the video signal of the broadcast content from an external server, camera, recording medium, or the like, and supplies the video signal to the video encoder 114.

The video encoder 114 encodes the video signal supplied from the video acquiring unit 113 by an encoding method such as MPEG2, and supplies the resultant video stream to the multiplexing unit 117.

The data acquiring unit 115 acquires data for generating data-carousel data to be transmitted by a data carousel transmission, and supplies the data to the data-carousel data generating unit 116. As the data for generation, a BML file, an image file such as a JPEG (Joint Photographic Experts Group) file or a PNG (Portable Network Graphics) file, and the like are prepared.

Based on the data for generation supplied from the data acquiring unit 115, the data-carousel data generating unit 116 generates the data for a data carousel, and supplies the data as section data to the multiplexing unit 117. The data for a data carousel is transmitted by a data carousel transmission for each of the objects forming data called a module.

The multiplexing unit 117 multiplexes the audio stream from the audio encoder 112, the video stream from the video encoder 114, and the section data from the data-carousel data generating unit 116, and supplies the resultant transport stream to the transmitting unit 118.

Although not shown in the drawing for ease of explanation, subtitles data is also supplied to the multiplexing unit 117 where necessary, and is multiplexed with the transport stream. Also, the transport stream contains the later described PSI/SI section data.

The transmitting unit 118 transmits the transport stream supplied from the multiplexing unit 117 as a broadcast signal via the antenna 119.

The transmitting device 10 has the above described structure.

### <Example Structure of a Receiving Device>

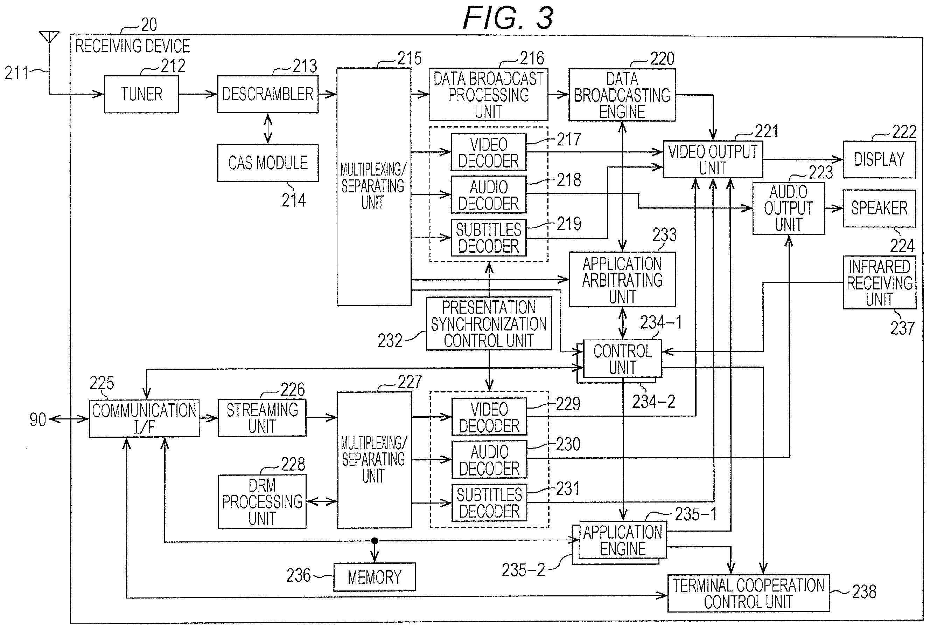

Fig. 3 shows an example structure of the receiving device 20 shown in Fig. 1.

The receiving device 20 is formed mainly with a first block for realizing a function to receive and reproduce broadcast content transmitted by broadcast waves of digital television broadcasting, and a second block for realizing a function to receive and reproduce communication content delivered via the Internet 90.

The first block includes a tuner 212, a descrambler 213, a CAS module 214, a multiplexing/separating unit 215, a data broadcast processing unit 216, a video decoder 217, an audio decoder 218, a subtitles decoder 219, and a data broadcasting engine 220.

The second block includes a communication interface 225, a streaming unit 226, a multiplexing/separating unit 227, a DRM processing unit 228, a video decoder 229, an audio decoder 230, and a subtitles decoder 231.

Components to provide functions shared between the first block and the second block include a video output unit 221, a display 222, an audio output unit 223, a speaker 224, a presentation synchronization control unit 232, an application arbitrating unit 233, a control unit 234, an application engine 235, a memory 236, an infrared receiving unit 237, and a terminal cooperation control unit 238.

The tuner 212 extracts a broadcast signal of a selected channel from broadcast signals received by an antenna 211, and demodulates the extracted broadcast signal. The tuner 212 then supplies the resultant transport stream to the descrambler 213.

The descrambler 213 cancels scrambling of the scrambled transport stream supplied from the tuner 212, and supplies the resultant stream to the multiplexing/separating unit 215.

As the CAS (Conditional Access System) module 214 stores information for broadcast content viewing control and contract management, the descrambler 213 refers to the CAS module 214 when canceling the scrambling of the transport stream that has been scrambled for restricting reception on the transmission side.

The multiplexing/separating unit 215 separates the transport stream supplied from the descrambler 213, into a video stream, an audio stream, subtitles data, and section data. Of the separated streams, the multiplexing/separating unit 215 supplies the section data to the data broadcast processing unit 216, the video stream to the video decoder 217, the audio stream to the audio decoder 218, and the subtitles data to the subtitles decoder 219.

The data broadcast processing unit 216 performs various kinds of processing on the section data supplied from the multiplexing/separating unit 215.

Specifically, the data broadcast processing unit 216 performs section filtering on the DSM-CC (Digital Storage Media - Command and Control) section transmitted by a data carousel transmission in the section data. The data broadcast processing unit 216 analyzes the resultant DII (Download Info Indication) and DDB (Download Data Block). As a result of the analysis of the DII and the DDB, the data broadcast processing unit 216 supplies data such as a BML document or image data contained in the DDB to the data broadcasting engine 220 on a module-by-module basis.

The data of a data broadcast application is transmitted by a data carousel transmission for each of the objects forming data called a module.

A broadcast signal includes not only the above mentioned DSM-CC section, but also a PSI/SI section.

PSI (Program Specific Information) is the information necessary in a system that performs reception through a selected specific channel. The PSI contains a PMT. A PMT (Program Map Table) stores the respective PIDs (Packet IDs) of images and sound contained in a program. SI (Service Information) is information such as broadcast program information, and contains an EIT, for example. An EIT (Event Information Table) contains information about a broadcast show, such as its name, date and time, and contents of the show. However, an EIT is written as EIT p/f in some cases. In an EIT p, "p" is the first letter of "present", and indicates that information about the current broadcast show is contained. In an EIT f, "f" is the first letter of "following", and indicates that information about the next broadcast show is contained.

Those pieces of information obtained from the PSI/SI section are supplied to the control unit 234, where appropriate.

Based on the module-by-module data supplied from the data broadcast processing unit 216, the data broadcasting engine 220 generates a video signal of the data broadcast application by controlling the BML browser, and supplies the video signal to the video output unit 221.

The video decoder 217 decodes the video stream supplied from the multiplexing/separating unit 215 by a decoding method compatible with the encoding method used by the video encoder 114 (Fig. 2), and supplies the resultant video signal to the video output unit 221.

The audio decoder 218 decodes the audio stream supplied from the multiplexing/separating unit 215 by a decoding method compatible with the encoding method used by the audio encoder 112 (Fig. 2), and supplies the resultant audio signal to the audio output unit 223.

The subtitles decoder 219 decodes the subtitles data supplied from the multiplexing/separating unit 215, and supplies the resultant video signal to the video output unit 221.

The video output unit 221 supplies the video signal supplied from the video decoder 217 to the display 222. As a result, a video image of a broadcast show or the like is displayed on the display 222.

When a video signal is supplied from the subtitles decoder 219 or the data broadcasting engine 220, the video output unit 221 combines the video signal with the video signal from the video decoder 217, and outputs the resultant video signal to the display 222. As a result, a video image having subtitles or data broadcast information such as weather forecast superimposed on a broadcast show is displayed on the display 222, for example.

The audio output unit 223 supplies the audio signal supplied from the audio decoder 218, to the speaker 224. As a result, the sound corresponding to a video image such as a broadcast show is output from the speaker 224.

Under the control of the control unit 234, the communication interface 225 receives the data of communication content delivered from a delivery server (not shown) provided in the Internet 90, and supplies the data to the streaming unit 226.

The streaming unit 226 subjects the communication content data supplied from the communication interface 225, to various kinds of processing necessary for performing streaming, and supplies the resultant data to the multiplexing/separating unit 227.

The multiplexing/separating unit 227 separates the data supplied from the streaming unit 226 into a video stream, an audio stream, and subtitles data. Of the separated streams, the multiplexing/separating unit 227 supplies the video stream to the video decoder 229, the audio stream to the audio decoder 230, and the subtitles data to the subtitles decoder 231.

The DRM (Digital Rights Management) processing unit 228 performs processing for controlling restrictions on communication content rights management and copying. In a case where communication content designated for streaming is encrypted, for example, only the receiving device 20 used by a user who has been authorized by the author can supply an encryption key and decode ciphers for streaming.

The video decoder 229 decodes the video stream supplied from the multiplexing/separating unit 227, and supplies the resultant video signal to the video output unit 221.

The audio decoder 230 decodes the audio stream supplied from the multiplexing/separating unit 227, and supplies the resultant audio signal to the audio output unit 223.

The subtitles decoder 231 decodes the subtitles data supplied from the multiplexing/separating unit 227, and supplies the resultant video signal to the video output unit 221.

The video output unit 221 supplies the video signal supplied from the video decoder 229 to the display 222. When a video signal is supplied from the subtitles decoder 231, the video output unit 221 combines the video signal with the video signal from the video decoder 229, and supplies the resultant video signal to the display 222. As a result, a video image and subtitles of an aired broadcast show or the like are displayed on the display 222.

The audio output unit 223 supplies the audio signal supplied from the audio decoder 230, to the speaker 224. As a result, the sound corresponding to a video image such as an aired broadcast show is output from the speaker 224.

The presentation synchronization control unit 232 controls the video decoder 217, the audio decoder 218, and the subtitles decoder 219 to synchronize the video signals and the audio signal to be supplied to the video output unit 221 and the audio output unit 223. The presentation synchronization control unit 232 also controls the video decoder 229, the audio decoder 230, and the subtitles decoder 231 to synchronize the video signals and the audio signal to be supplied to the video output unit 221 and the audio output unit 223.

Under the control of the control unit 234, the application arbitrating unit 233 determines the application program with the highest operational priority among data broadcast applications and linked applications. Based on the determination result, the application arbitrating unit 233 controls an operation of a data broadcast application by the data broadcasting engine 220. Based on the determination result, the application arbitrating unit 233 also controls an operation of a linked application by the control unit 234 and the application engine 235.

Alternatively, the application arbitrating unit 233 may monitor the multiplexing/separating unit 215, and, based on various kinds of information separated from a transport stream, determine the application program with the highest operational priority among the data broadcast applications and the linked applications.

Under the control of the control unit 234, the communication interface 225 accesses the XML-AIT server 30 via the Internet 90, and requests an XML-AIT. The communication interface 225 receives an XML-AIT provided by the XML-AIT server 30, and supplies the XML-AIT to the control unit 234.

Here, the control unit 234 and the application engine 235 are provided in accordance with the number of linked applications that can be started in the receiving device 20. In the example structure shown in Fig. 3, the two linked applications, a first linked application and a second linked application, are assumed to be started, and therefore, two control units 234 and two application engines 235 are provided. It should be noted that a control unit 234-1 and a control unit 234-2 will be hereinafter referred to simply as the control unit 234 when there is no need to distinguish them from each other. Also, an application engine 235-1 and an application engine 235-2 will be hereinafter referred to simply as the application engine 235 when there is no need to distinguish them from each other.

Based on the XML-AIT supplied from the communication interface 225, the control unit 234-1 controls the application engine 235-1. Under the control of the control unit 234-1, the application engine 235-1 controls the operation of the first linked application.

Based on the XML-AIT supplied from the communication interface 225, the control unit 234-2 controls the application engine 235-2. Under the control of the control unit 234-2, the application engine 235-2 controls the operation of the second linked application.

Under the control of the application engine 235-1, the communication interface 225 accesses the application server 40 via the Internet 90, and requests the first linked application. The communication interface 225 receives the first linked application provided by the application server 40, and stores the first linked application into the memory 236.

Under the control of the control unit 234-1, the application engine 235-1 starts the first linked application stored in the memory 236, and controls the operation of the first linked application. In a case where the first linked application is formed with an HTML document written in HTML5 (Hyper Text Markup Language 5), the application engine 235-1 controls an HTML browser compatible with HTML5, to generate a video signal of the first linked application and supply the video signal to the video output unit 221.

Like the application engine 235-1, the application engine 235-2 acquires the second linked application from the application server 40, and controls the operation of the second linked application.

The infrared receiving unit 237 receives a command transmitted by using wireless communication with an infrared ray from the remote controller 20R (Fig. 1), and notifies the control unit 234 of the operating signal corresponding to the command. Based on the operating signal supplied from the infrared receiving unit 237, the control unit 234 controls the operations of the respective components of the receiving device 20.

When an external device (not shown) is connected to the receiving device 20, the terminal cooperation control unit 238, under the control of the control unit 234 and the application engine 235, controls the communication interface 225 and performs various kinds of processing to cooperate with the connected external device.

The receiving device 20 has the above described structure.

### <Example Functional Structure of a Control Unit>

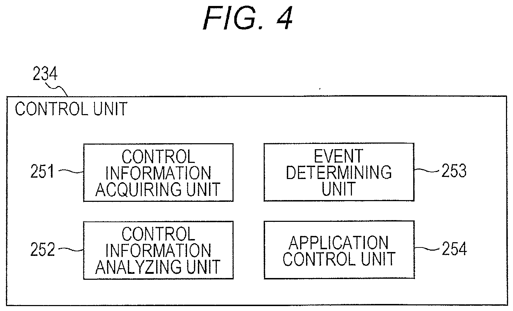

Fig. 4 is a diagram showing an example functional structure of the control unit 234 shown in Fig. 3.

The control unit 234 includes a control information acquiring unit 251, a control information analyzing unit 252, an event determining unit 253, and an application control unit 254.

The control information acquiring unit 251 controls the communication interface 225, to acquire an XML-AIT provided by the XML-AIT server 30 and supply the XML-AIT to the control information analyzing unit 252.

The control information analyzing unit 252 analyzes the XML-AIT supplied from the control information acquiring unit 251, and supplies the analysis result to the event determining unit 253 and the application control unit 254.

Based on the analysis result supplied from the control information analyzing unit 252 and various operating signals, the event determining unit 253 performs an operation to determine whether an event to end the linked application being executed has occurred. The event determining unit 253 supplies the event occurrence determination result to the application control unit 254.

In accordance with the analysis result supplied from the control information analyzing unit 252, the application control unit 254 controls the application engine 235, to control the operation of the linked application. In accordance with the determination result supplied from the event determining unit 253, the application control unit 254 also ends the linked application being executed.

The control unit 234 has the above described structure.

### <Example Structure of an XML-AIT Server>

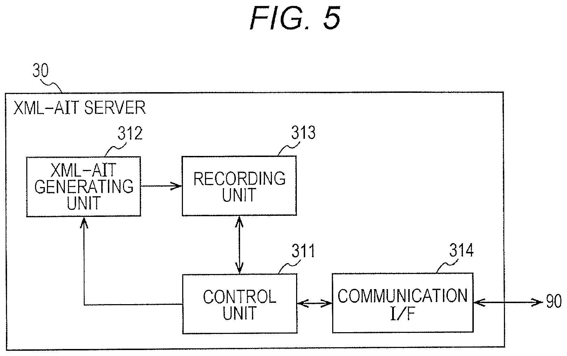

Fig. 5 is an example structure of the XML-AIT server 30 shown in Fig. 1.

The XML-AIT server 30 includes a control unit 311, an XML-AIT generating unit 312, a recording unit 313, and a communication interface 314.

The control unit 311 controls operations of the respective components of the XML-AIT server 30.

Under the control of the control unit 311, the XML-AIT generating unit 312 generates an XML-AIT, and records the XML-AIT on the recording unit 313.

When there is a request for the XML-AIT from the receiving device 20, the control unit 311 reads and acquires the XML-AIT from the recording unit 313.

Under the control of the control unit 311, the communication interface 314 transmits the XML-AIT to the receiving device 20 via the Internet 90.

The XML-AIT server 30 has the above described structure.

### <Data Transmission by Data Carousel Transmission>

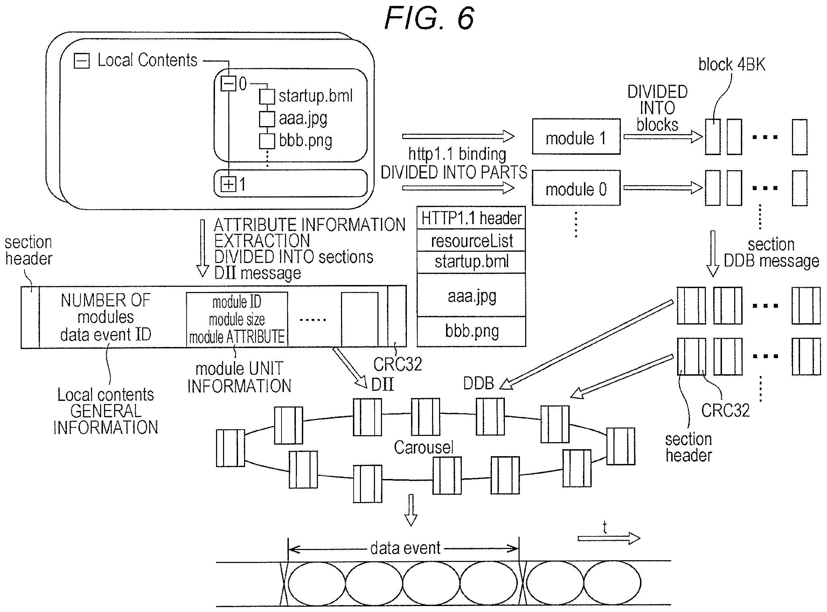

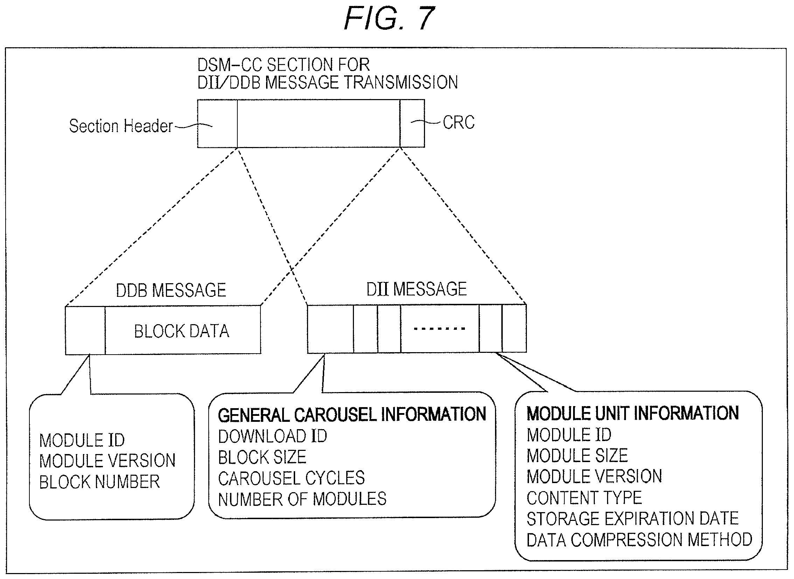

As described above, a data broadcast application transmitted from the transmitting device 10 is transmitted by a data carousel transmission. Referring now to Figs. 6 and 7, data transmission by a data carousel transmission is described.

As shown in Fig. 6, a data broadcast application is formed with a set of JPEG and PNG image files and the like, as well as BML files, and is managed in folders that store those files in a directory. When the data broadcast application is transmitted by a data carousel transmission, the group of files to be transmitted is divided into virtual folders.

In the data carousel transmission, the two kinds of messages, DDBs (Download Data Blocks) containing the actual data of the data broadcast application and a DII (Download InfoIndication) storing DDB directory information, are mainly used.

DDBs correspond to the respective blocks in the module, and have block numbers allotted thereto. The receiving device 20 restructures the module by rearranging acquired data blocks in the order of the block numbers. The DII indicates the index information about the transmission targets in the data carousel. One DII can indicate information about more than one module. The receiving device 20 receives the DII, to recognize the configuration of the module.

As the module divided into blocks is cyclically transmitted by a data carousel transmission as conceptually shown in Fig. 6, the receiving device 20 acquires DDBs based on the DII, and restructures the target module. Although the DDBs and the DII are transmitted in any order, the DII is transmitted at a relatively high frequency, as the DII stores the data equivalent to the index information.

Fig. 7 is a diagram showing the structure of a DSM-CC section for transmission of the DDB or DII message shown in Fig. 6.

As shown in the upper half of Fig. 7, a DSM-CC section is formed with a section header, a payload portion, and a CRC portion. The above described respective blocks of the module are stored in the payload portion. The section header stores table identification information, a section length, a table identification extension, version information, and the like, as well as section information.

Information indicating whether the target section is a DDB message or a DII message is written in the table identification information. The section length indicates the size of the section excluding the fields of the table identification information and the section length. The table identification extension, the version information, and the like have varying meanings, depending on the value of the table identification information. The section information contains section numbers and the last section number.

The CRC portion is a check code for determining whether the TS packets forming the target section have been collected in the correct order, and is used in an error correcting operation by a cyclic redundancy check (CRC).

The lower half of Fig. 7 shows the structures of a DDB message and a DII message.

In a case where the target section is a DDB message, the payload portion is formed with information that indicates the module ID, the module version, and the block number, as well as block data.

The identification information about the module contained in the DDB is written in the module ID. The version information about the module contained in the DDB is written in the module version. The block number of the module contained in the DDB is written in the block number.

In a case where the target section is a DII message, the payload portion is formed with entire carousel information that is information about general transmission by data carousel transmissions, module unit information that is information about each corresponding module, and private data.

The general carousel information contains a download ID, a block size, carousel cycles, and the number of modules. The identification information about the entire data to be transmitted by a DDB is described in the download ID. Part of the bit structure of the download ID is called a data event ID (data_event_id). The size of each block is written in the block size. The transmission cycles are written in the carousel cycles. The number of modules to be transmitted is written in the number of modules.

Meanwhile, the module unit information contains a module ID, a module size, a module version, a content type, a storage expiration date, and a data compression method, which are module-specific information. The identification information about the module to be transmitted by a DDB is written in the module ID. The size of the module to be transmitted by a DDB is written in the module size. The version information about the module to be transmitted by a DDB is written in the module version. The type, the storage expiration date, and the data compression method of the file are written in the content type, the storage expiration date, and the data compression method, respectively.

The private data contains a pull-back flag, for example.

In the transmitting device 10, the section data is further divided and stored into consecutive TS packets to be transmitted. In the data carousel transmission, the data broadcast application is cyclically transmitted on a block-by-block (section-by-section) basis.

In the receiving device 20, on the other hand, the TS packets transmitted from the transmitting device 10 are received, the section data is restored by using the received TS packets, and the original module is restructured by using the restored section data. In the receiving device 20, the data broadcast application is then restored based on the module identified by the module ID.

Data transmission by a data carousel transmission is performed in the above described manner.

### <Details of an XML-AIT>

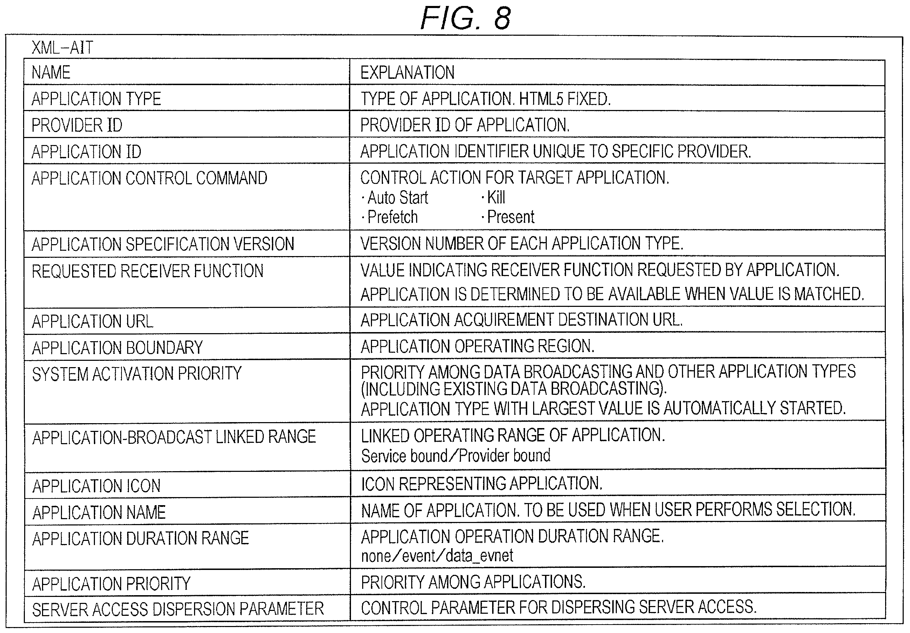

Referring now to Figs. 8 through 11, an XML-AIT is described in detail.

### (Respective Items Written in an XML-AIT)

Fig. 8 is a diagram for explaining the respective items written in an XML-AIT.

As shown in Fig. 8, the following are written in an XML-AIT: an application type, a provider ID, an application ID, an application control command, an application specification version, a requested receiver function, an application URL, an application boundary, a system activation priority, an application-broadcast linked range, an application icon, an application name, an application duration range, an application priority, a server access dispersion parameter, and the like.

The type of a linked application is written in the application type. In the type, HTML5 is designated and fixed, for example.

The identification information about the provider who provides the linked application is written in the provider ID.

The identification information about a linked application unique to a specific provider is written in the application ID. That is, the linked application can be uniquely identified by the application ID used in combination with the above described provider ID.

A control action for the target linked application is written in the application control command. A designated action such as "Auto Start", "Kill", "Prefetch", or "Present" are written in the control command.

Here, "Auto Start" is a command for automatic, instant execution of the linked application. "Kill" is a command for ending the linked application.

"Prefetch" is a command for acquiring the linked application. "Present" is a command for preventing automatic execution of the linked application.

The version information about each of the application types is written in the application specification version.

A profile value indicating a function requested from the receiving device 20 by the linked application is written in the requested receiver function. That is, when having the function indicated by the profile value, the receiving device 20 determines whether the linked application can be used.

The acquirement destination URL of the linked application is written in the application URL. That is, the URL of the application server 40 is designated in the application URL.

The operating range of the linked application is written in the application boundary. This operating range is designated by boundary information.

In the boundary information, a specific domain is designated as the operating range of the linked application, and the operation of the linked application is allowed in the range of the designated domain, for example. Here, the domain of the acquirement destination URL of the linked application written in the application URL may be set as the boundary information.

In a case where the first linked application is started by "Auto Start", the information indicating the priority among the type of the first linked application, the type of the data broadcast application, and the type of the second linked application is written in the system activation priority. The receiving device 20 starts the application program with the largest priority value among the data broadcast application and the linked applications.

The linked operating range of the linked applications is written in the application-broadcast linked range. The linked operating range is designated as a bind type.

In a case where a service bound is designated as the bind type, for example, the linked application operates in an interlocked manner in the range designated as a predetermined service. In a case where a provider bound is designated, the linked application operates in the range designated as the range of a single broadcasting organization.

The icon representing the target linked application is designated in the application icon.

The name of each target linked application is written in the application name. For example, in a case where both the first linked application and the second linked application can be started, the names of the linked applications are presented to a user so as to prompt the user to select a start of one of the linked applications.

Duration range information for specifying the range on the time axis in which the operation of the linked applications can be continued is written in the application duration range. An event (event) or a data event (data_event) is designated in the duration range information. However, there are cases where none is designated in the duration range information.

In a case where no duration range information is designated, the linked application being executed is ended when an instruction to end the linked application being executed is issued, another linked application different from the linked application being executed is started, or broadcast channels are switched.

In a case where an event is designated as duration range information, the linked application duration range is maintained during a single broadcast show, and therefore, the linked application operation is continued. When broadcast shows are changed, the linked application operation is ended. A check is made to determine whether the same show is continued based on whether the value of "event_id" contained in the EIT p has been updated, for example.

In a case where a data event is designated as duration range information, the data broadcast application is within the linked application duration range during the same data broadcast, and therefore, the linked application operation is continued. When data broadcasts are changed, the linked application operation is ended. A check is made to determine whether the same data broadcast is continued based on whether the value of "data_event_id" in the DII transmitted by a data carousel transmission has been updated, for example.

The priority among applications of the same application type is written in the application priority. For example, a value indicating which application program should be preferentially selected among application programs of documents in the HTML5 format is designated in the application priority.

A control parameter for dispersing the time to apply a command and dispersing access to the application servers 40 is written in the server access dispersion parameter.

In an XML-AIT, the application type, the provider ID, the application ID, the application control command, and the application URL are necessary. The items other than those items are conditional or completely optional.

The above described items are written in an XML-AIT.

### (Examples of XML-AIT Descriptions)

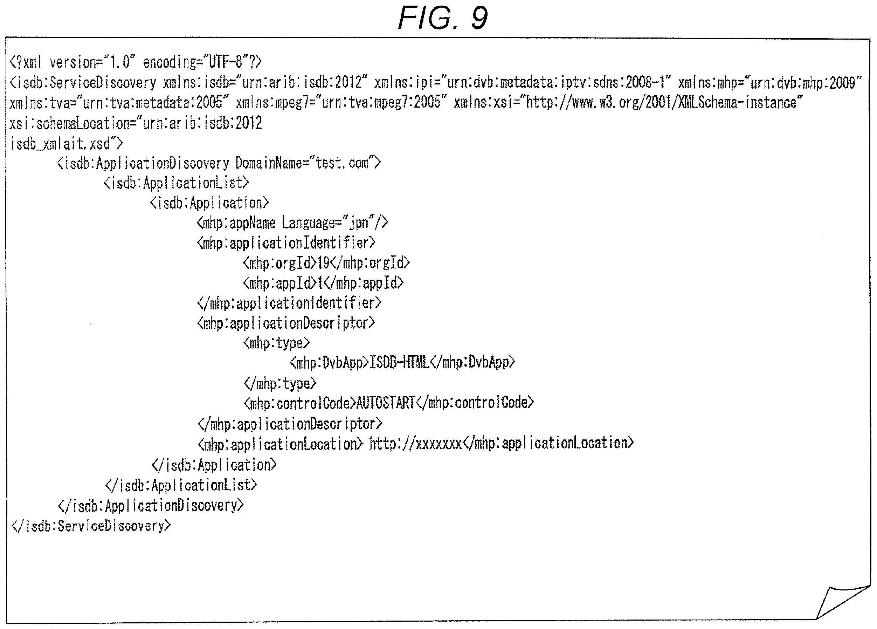

Referring now to Figs. 9 through 11, examples of XML-AIT descriptions are described.

### (Duration Range Information: None)

Fig. 9 is a diagram showing an example of an XML-AIT description in a case where no duration range information is designated.

As shown in Fig. 9, an XML-AIT is written as an XML document. At the top of the XML document, information about an XML declaration and a namespace is written. A prefix "isdb" means a tag that is specified by the ISDB (Integrated Services Digital Broadcasting) standards, and "mhp" means a tag that is specified by the DVB (Digital Video Broadcasting) standards.

An ApplicationList element in which one or more Application elements can be written is written in the ApplicationDiscovery DomainName element. Control information for controlling linked application operations is written in the respective Application elements.

An appName element, an applicationIdentifier element, an applicationDescriptor element, an applicationLocation element, and an applicationTimeScopeDescriptor element are written in the Application elements. However, Fig. 9 shows an example of an XML-AIT description in a case where no duration range information is designated, and therefore, nothing is written in the applicationTimeScopeDescriptor element.

In the appName element, "jpn", which indicates that the language of the linked application is Japanese, is designated as the Language attribute.

An orgId element and an appId element are written in the applicationldentifier element. In the orgId element, "19", which indicates a provider ID, is written. In the appId element, "1", which indicates an application ID, is written. That is, the linked application is uniquely identified by a combination of the application ID "1" and the provider ID "19".

A type element and a controlCode element are written in the applicationDescriptor element. In the type element, a DvbApp element is written, and "ISDB-HTML", which indicates an HTML document specified by the ISDB standards, is also written. "AUTOSTART", which indicates a control command, is written in the controlCode element.

In the ApplicationLocation element, "http://xxxxxxx", which indicates the application URL, is written. That is, the URL of the application server 40 is "http://xxxxxxx".

Since only one linked application is started at once in this embodiment, only one Application element is written in the ApplicationList element. Also, since any XML-AIT is not used in control operations such as ending the linked application, only "AUTOSTART" for instantly executing the linked application is written in the controlCode element.

In a case where no duration range information is designated as described above, any applicationTimeScopeDescriptor element is not written in the XML-AIT.

### (Duration Range Information: Event (event))

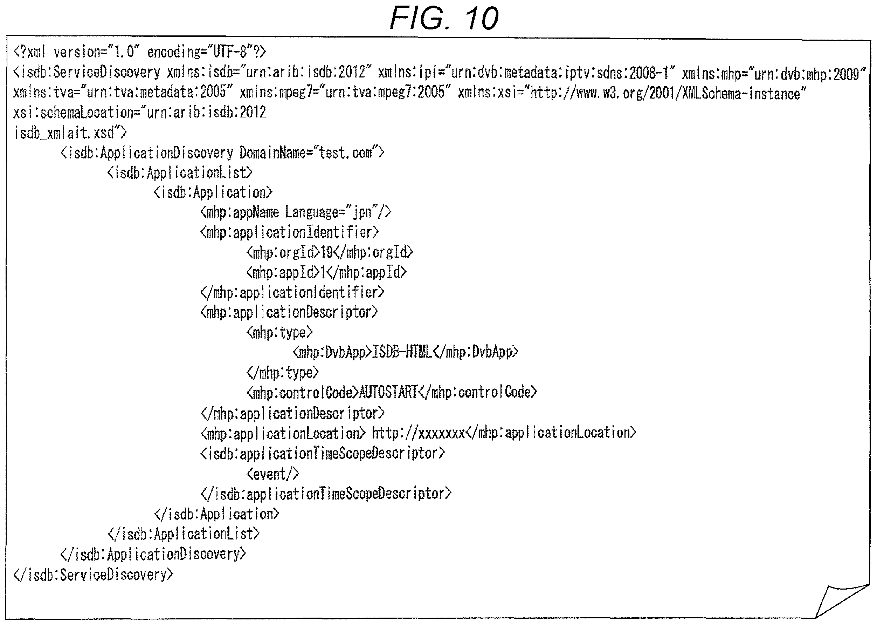

Fig. 10 is a diagram showing an example of an XML-AIT description in a case where an event is designated as duration range information.

In Fig. 10, the appName element, the applicationldentifier element, the applicationDescriptor element, and the applicationLocation element that are written in the application element are the same as those in Fig. 9, and therefore, explanation of them is not repeated herein.

An event element is written in the applicationTimeScopeDescriptor element. From the event element written in the XML-AIT, the receiving device 20 can recognize that an event is designated as duration range information.

As described above, in a case where an event is designated as duration range information, an event element is written in the applicationTimeScopeDescriptor element in the XML-AIT.

### (Duration Range Information: Data Event (data_event))

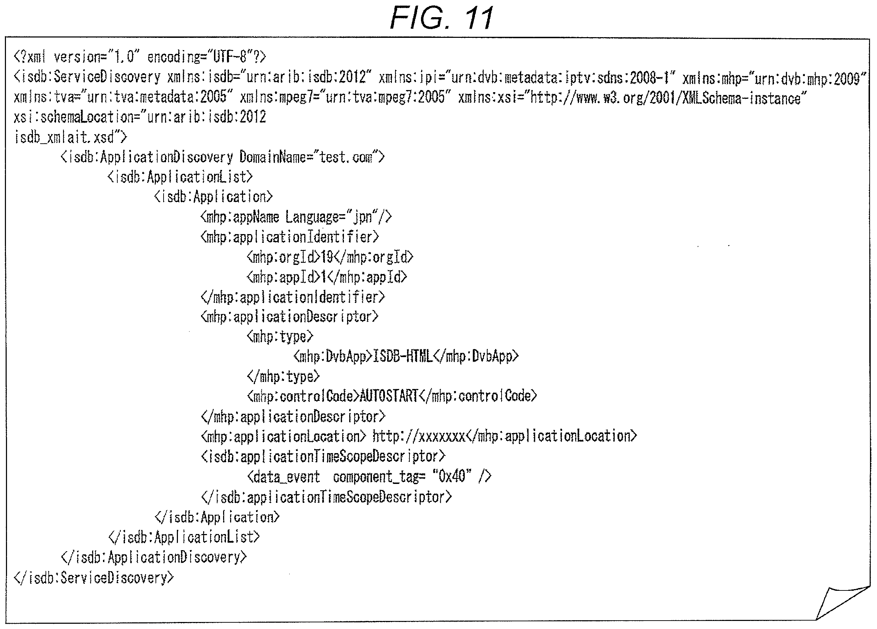

Fig. 11 is a diagram showing an example of an XML-AIT description in a case where a data event is designated as duration range information.

In Fig. 11, the appName element, the applicationldentifier element, the applicationDescriptor element, and the applicationLocation element that are written in the application element are the same as those in Fig. 9, and therefore, explanation of them is not repeated herein.

A data_event element is written in the applicationTimeScopeDescriptor element. From the data_event element written in the XML-AIT, the receiving device 20 can recognize that a data event is designated as duration range information.

In the data_event element, "0x04" is designated as a component_tag attribute. Since there is more than one data carousel transmission using broadcast waves in some cases, the receiving device 20 identifies the target data carousel transmission from the attribute value of the component_tag attribute.

As described above, in a case where a data event is designated as duration range information, a data_event element is written in the applicationTimeScopeDescriptor element, and a value for specifying the target carousel transmission is designated as the component_tag attribute in the XML-AIT.

Examples of XML-AIT descriptions have been described so far.

However, any description method may be used in XML-AITs, and descriptions in XML-AITs are not limited to the example descriptions shown in Fig. 9 through 11.

<Structure of an EIT>

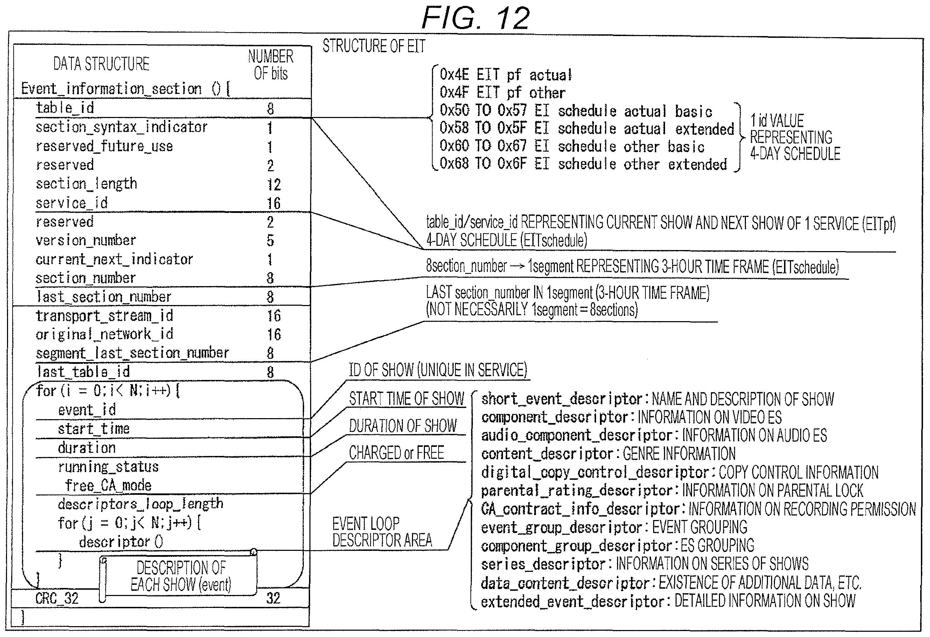

Referring now to Fig. 12, the structure of an EIT is described.

Identification information about an EIT is written in "table_id". Meanwhile, "1" is written in "section_syntax_indicator".

The section length of the EIT is written in "section_length". The "service_id" of the target program is written in "service_id".

Version information is written in "version_number". Meanwhile, "1" is written in "current_next_indicator". A section number is written in "section_number". The largest section number is written in

### "last_section_number".

The "transport_stream_id" of the target transport stream is shown in "transport_stream_id". The "network_id" of the original delivery system is written in "original_network_id". The last "section_number" is written in "segment_last_section_number". The last "table_id" is written in "last_table_id".

A loop of "event_id", "start_time", "duration", "running_status", "free_CA_mode", "descriptor" is written in the loop.

The "event_id" of the target event is written in "event_id". The programmed start time of the target event is written in "start_time". The duration of the target event is written in "duration". Further, "0" (undefined) is written in "running_status". In "free-CA-mode", "0" is set when the show is free of charge, and "1" is set when the show is a pay program.

The loop length of the "descriptor" loop is written in "descriptors_loop_length". As shown in Fig. 12, descriptors and information such as

### "short_event_descriptor" and "component_descripto" are written in "descriptor()".

An EIT has the above described structure.

### <Operation Sequence>

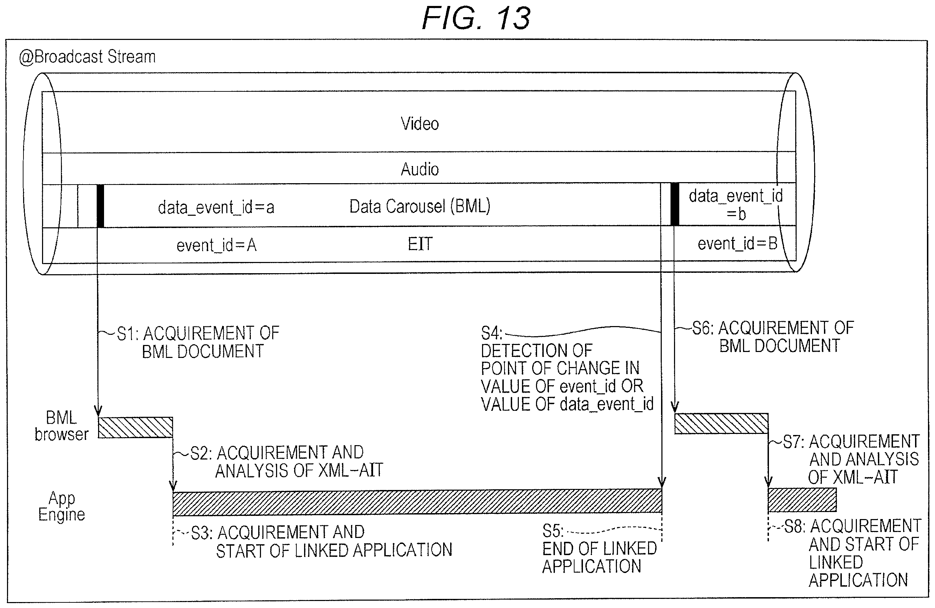

Fig. 13 is a diagram showing an operation sequence of the receiving device 20.

As shown in Fig. 13, a video stream, an audio stream, and section data are multiplexed in a broadcast stream (a transport stream).

Of the section data, the DSM-CC section to be transmitted by a data carousel transmission contains a DSM-CC section for DII message transmission. The download ID contained in the payload portion of the DII message has "data_event_id" written therein.

Specifically, the download ID serves as a label for uniquely identifying a carousel, and "data_event_id" is written in the download ID in a case where a DII is transmitted in an operation of a data event compliant with an encoding standard or the like.

The "data_event_id" is identification information that distinguishes temporally adjacent data events using an event message from each other, and is designed to prevent misdelivery of an event message between data broadcast applications delivered in those data events. Therefore, different identification information is allotted to data broadcast applications adjacent to each other at the time of transmission.

The transport stream also includes PSI/SI sections. The EIT p contained in the SI section has "event_id" written therein. The "event_id" is the identification information about the target event, and is uniquely allotted to one broadcast show (service).

In the receiving device 20, a BML document transmitted by a data carousel transmission is acquired during the viewing of broadcast content (S1). As a result, the data broadcast application is executed.

Also, in the receiving device 20, when an instruction to start a linked application is issued by a user operation during the viewing of the broadcast content, an XML-AIT is acquired from the XML-AIT server 30, and i.s analyzed (S2).

In the receiving device 20, the linked application is acquired from the application server 40 in accordance with a result of the XML-AIT analysis, and is started (S3) . As the linked application is started, the data broadcast application is ended. Alternatively, the linked application may be automatically started in conjunction with the data broadcast application.

After that, the execution of the linked application is continued in the receiving device 20.

In a case where the result of the XML-AIT analysis shows that an event is designated as the duration range information, the receiving device 20 constantly monitors the value of the "event_id" contained in the EIT p transmitted in the SI section, and detects a point of change in the value of the "event_id". The comparison target value of the "event_id" at the point of change is the value of the "event_id" acquired at the start of the linked application.

In a case where the result of the XML-AIT analysis shows that a data event is designated as the duration range information, the receiving device 20 constantly monitors the value of the "data_event_id" contained in the DII transmitted in the DSM-CC section, and detects a point of change in the value of the "data_event_id". The comparison target value of the "data_event_id" at the point of change is the value of the "data_event_id" acquired at the start of the linked application.

When a point of change in the value of the "event_id" or a point of change in the value of the "data_event_id" is detected by the receiving device 20 (S4), the linked application being executed is ended (S5).

In the example illustrated in Fig. 13, at the point of change in the value of the "event_id", the value changes from "A" to "B". At the point of change in the value of the "data_event_id", the value changes from "a" to "b". In the example illustrated in Fig. 13, the point of change in the value of the "event_id" matches the point of change in the value of the "data_event_id". However, those points of change do not necessarily match.

As described above, in a case where a broadcast show is of a single broadcast, the execution of the linked application is continued in the receiving device 20. When the broadcast show is ended, the linked application is also ended. Also, in a case where a data broadcast application executed in conjunction with a broadcast show is of a single data broadcast, the execution of the linked application is continued in the receiving device 20. When the data broadcast is ended, the linked application is also ended.

In a case where the result of the XML-AIT analysis shows that no duration range information is designated, the linked application being executed is ended when an instruction to end the linked application being executed is issued, another linked application different from the linked application being executed is started, or broadcast channels are switched.

After that, a BML document is again acquired in the receiving device 20 (S6), and a data broadcast application is executed. When an instruction to start a linked application is issued, an XML-AIT is acquired and analyzed (S7). In the receiving device 20, the linked application is acquired in accordance with a result of the XML-AIT analysis, and is executed (S8). The linked application being executed is also ended when a point of change in the value of the "event_id" is detected as in the above description.

The above is an operation sequence of the receiving device 20.

### <Specific Operations to be Performed by the Respective Devices>

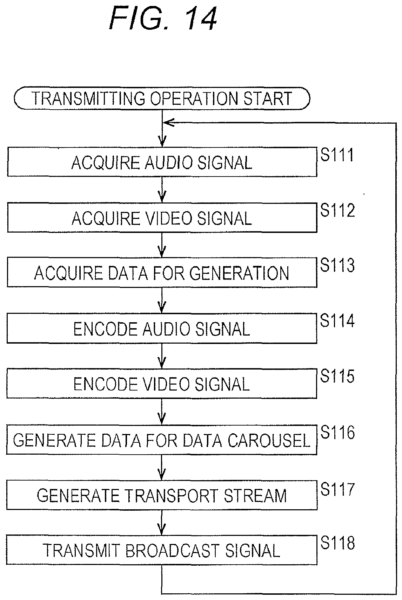

Referring now to Figs. 14 through 18, specific operations to be performed by the respective devices forming the broadcast-communication hybrid system 1 are described.

### (Transmitting Operation)

Referring first to the flowchart shown in Fig. 14, a transmitting operation to be performed by the transmitting device 10 is described.

In step S111, the audio acquiring unit 111 acquires an audio signal corresponding to the sound of broadcast content from an external server or the like.

In step S112, the video acquiring unit 113 acquires a video signal corresponding to the video image of the broadcast content from an external server or the like.

In step S113, the data acquiring unit 115 acquires data for generating data for a data carousel.

In step S114, the audio encoder 112 encodes the audio signal acquired by the audio acquiring unit 111, and generates an audio stream.

In step S115, the video encoder 114 encodes the video signal acquired by the video acquiring unit 113, and generates a video stream.

In step S116, the data-carousel data generating unit 116 generates the data for a data carousel based on the data for generation acquired by the data acquiring unit 115. The data for a data carousel is formed with section data in a section format.

In step S117, the multiplexing unit 117 generates a transport stream by multiplexing the audio stream generated by the audio encoder 112, the video stream generated by the video encoder 114, and the section data generated by the data-carousel data generating unit 116.

Although not specifically described herein for ease of explanation, the transport stream also contains subtitles data, PSI/SI section data, and the like.

In step S118, the transmitting unit 118 transmits the transport stream generated by the multiplexing unit 117 as a broadcast signal via the antenna 119. After the procedure of step S118 is completed, the operation returns to step S111, and the procedures thereafter are repeated.

A transmitting operation is performed in the above described manner.

### (Receiving Operation)

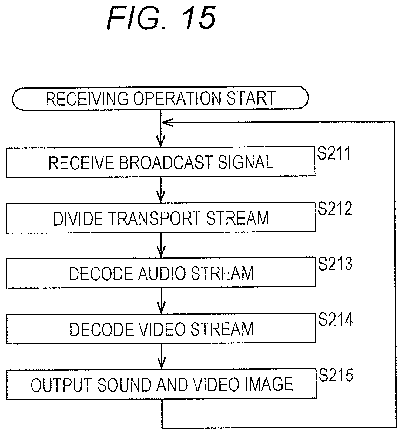

Referring now to the flowchart shown in Fig. 15, a receiving operation to be performed by the receiving device 20 is described.

In step S211, the tuner 212 receives a broadcast signal via the antenna 211, and demodulates the broadcast signal.

In step S212, the multiplexing/separating unit 215 separates the transport stream demodulated by the tuner 212, into an audio stream, a video stream, and section data. If the transport stream also contains subtitles data, the multiplexing/separating unit 215 further separates the subtitles data from the rest of the transport stream.

In step S213, the audio decoder 218 decodes the audio stream separated by the multiplexing/separating unit 215, and generates an audio signal.

In step S214, the video decoder 217 decodes the video stream separated by the multiplexing/separating unit 215, and generates a video signal.

In step S215, the speaker 224 outputs the sound corresponding to the audio signal. The display 222 displays the video image corresponding to the video signal. As a result, the display 222 displays the video image of broadcast content such as a broadcast show, and the speaker 224 outputs the sound corresponding to the video image.

After the procedure of step S215 is completed, the operation returns to step S211, and the procedures thereafter are repeated.

A receiving operation is performed in the above described manner.

### (Data Broadcast Compatible Operation)

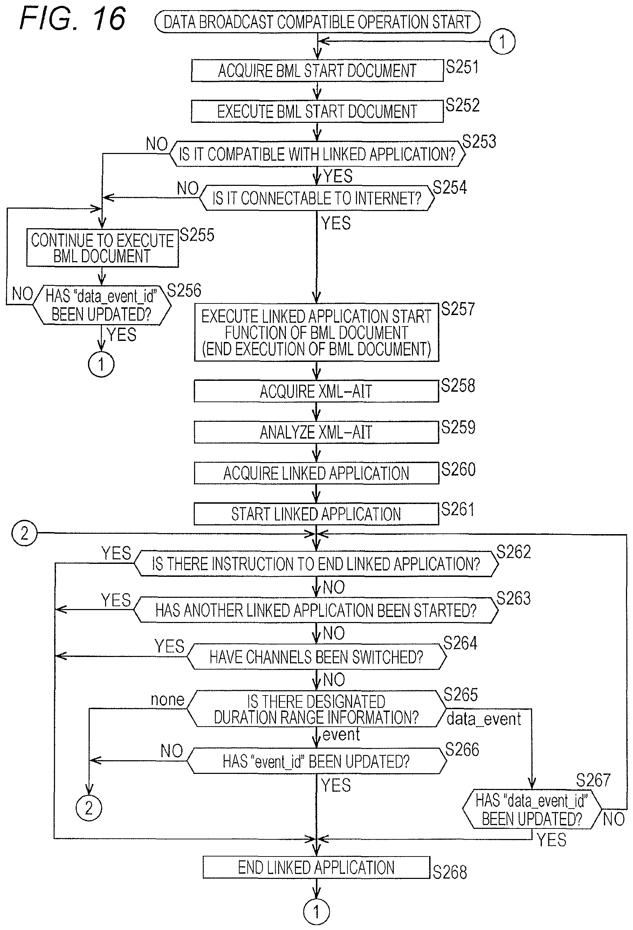

Referring now to the flowchart shown in Fig. 16, a data broadcast compatible operation to be performed by the receiving device 20 is described.

The data broadcast compatible operation shown in Fig. 16 is performed by the receiving device 20 when broadcast content is viewed through the receiving operation shown in Fig. 15, for example.

In step S251, the data broadcast processing unit 216 acquires a BML start document that is "module_id = 0" by analyzing a DII and a DDB obtained from a DSM-CC section separated by the multiplexing/separating unit 215.

In step S252, the data broadcasting engine 220 controls the BML browser, to execute the BML start document acquired by the data broadcast processing unit 216.

In step S253, the data broadcasting engine 220 determines whether the receiving device 20 has a function to execute linked applications based on the program written in the BML start document. If the receiving device 20 is determined to have a function to execute linked applications based on the program written in the BML start document in step S253, such as when the HTML browser is compatible with HTML5, the operation moves on to step S254.

If the receiving device 20 is determined not to have a function to execute linked applications based on the program written in the BML start document in step S253, such as when the HTML browser is not compatible with HTML5, the operation moves on to step S255.

In step S254, the data broadcasting engine 220 further determines whether the receiving device 20 can be connected to the Internet 90 based on the program written in the BML start document. If the receiving device 20 does not have the function of the second block (Fig. 3) including the communication interface 225 and the like, and is determined in step S254 not to be connectable to the Internet 90, the operation moves on to step S255.

In step S255, the data broadcasting engine 220 controls the BML browser, to continue the execution of the BML document acquired by the data broadcast processing unit 216.

In step S256, the data broadcast processing unit 216 constantly monitors the value of the "data_event_id" contained in the DII transmitted in the DSM-CC section, to determine whether the value of the "data_event_id" has been updated.

If it is determined in step S256 that the value of the "data_event_id" has not been updated, the operation returns to step S255, and the procedures thereafter are repeated. If it is determined in step S256 that the value of the "data_event_id" has been updated, the operation returns to step S251, and the procedures thereafter are repeated.

Specifically, where a data broadcast application indicates the content of a data broadcast to be delivered in one data event, the "data_event_id" distinguishes temporally adjacent data events from each other, and different identification information is allotted to each of adjacent data broadcast applications at the time of transmission. Therefore, when the value of the "data_event_id" is updated, the BML document of the data broadcast application to be delivered next is acquired and executed.

If it is determined in step S254 that the receiving device 20 is connectable to the Internet 90, the operation moves on to step S257.

In step S257, the data broadcasting engine 220 executes a linked application start function written in the BML document based on the program written in the BML start document. As a result, the data broadcasting engine 220 ends the execution of the BML document.

That is, in the case of the operation described with reference to the flowchart shown in Fig. 16, an automatic start of a linked application is designated in the BML document, and accordingly, the linked application is started, regardless of user operations.

In step S258, the control information acquiring unit 251 controls the communication interface 225, to acquire an XML-AIT provided by the XML-AIT server 30.

Since the URL of the XML-AIT server 30 is written in the EIT pf transmitted in the SI section, for example, the control information acquiring unit 251 constantly monitors the EIT pf and acquires the URL in advance. However, the URL of the XML-AIT server 30 can be acquired by any method, such as a method of acquiring the URL of the XML-AIT server 30 according to a description in the BML document, or some other acquirement method.

In step S259, the control information analyzing unit 252 analyzes the XML-AIT acquired by the control information acquiring unit 251.

In step S260, the application control unit 254 acquires a linked application from the application server 40 by controlling the communication interface 225 in accordance with a result of the XML-AIT analysis carried out by the control information analyzing unit 252.

It should be noted that the URL of the application server 40 is designated in the application URL written in the XML-AIT.

In step S261, in accordance with the result of the XML-AIT analysis carried out by the control information analyzing unit 252, the application control unit 254 controls the application engine 235, to instantly start the acquired linked application. It should be noted that "Auto Start" is designated in the control command written in the XML-AIT.

If the result of the XML-AIT analysis shows that an event is designated as the duration range information, the event determining unit 253 acquires and holds the value of the "event_id" contained in the EIT p. The value of the "event_id" is used in the process of determining whether the value of the "event_id" has been updated (S266 in Fig. 16). If the result of the XML-AIT analysis shows that a data event is designated as the duration range information, the event determining unit 253 acquires and holds the value of the "data_event_id" contained in the DII. The value of the "data_event_id" is used in the process of determining whether the value of the "data_event_id" has been updated (S267 in Fig. 16).

Execution of the linked application is started by the starting process in step S261. In step S262, the event determining unit 253 determines whether an instruction to end the linked application being executed has been issued.

If it is determined in step S262 that an instruction to end the linked application being executed has been issued, the operation moves on to step S268. In step S268, in accordance with a result of the determination by the event determining unit 253, the application control unit 254 ends the linked application being executed.

If it is determined in step S262 that an instruction to end the linked application being executed has not been issued, the operation moves on to step S263. In step S263, the event determining unit 253 determines whether another linked application different from the linked application being executed has been started.

If it is determined in step S263 that another linked application has been started, the operation moves on to step S268, and the linked application being executed is ended.

If it is determined in step S263 that any other linked application has not been started, the operation moves on to step S264. In step S264, the event determining unit 253 determines whether the channel of the broadcast show being viewed has been switched to another channel.

If it is determined in step S264 that channels have been switched, the operation moves on to step S268, and the linked application being executed is ended.

If it is determined in step S264 that channels have not been switched, the operation moves on to step S265.

In step S265, the event determining unit 253 determines designated content of the duration range information in accordance with the result of the XML-AIT analysis by the control information analyzing unit 252.

If it is determined in step S265 that any duration range information has not been designated, the operation returns to step S262, and the procedures thereafter are repeated.

Specifically, if any duration range information has not been designated, the linked application is ended (S268) only when a result of the determination in step S262, S263, or S264 is "YES". This case may be equivalent to a case where the XML-AIT shown in Fig. 9 is acquired, for example.

If it is determined in step S265 that an event (event) is designated as the duration range information, the operation moves on to step S266. In step S266, the event determining unit 253 constantly monitors the value of the "event_id" contained in the EIT p transmitted in the SI section, and determines whether the value of the "event_id" has been updated.

If it is determined in step S266 that the value of the "event_id" has been updated, the operation moves on to step S268, and the linked application being executed is ended. If it is determined in step S266 that the value of the "event_id" has not been updated, the operation returns to step S262, and the procedures thereafter are repeated.

Specifically, if an event is designated as the duration range information, the linked application is ended when the value of the "event_id" is updated, as well as when a result of the determination in step S262, S263, or S264 is "YES". This case may be equivalent to a case where the XML-AIT shown in Fig. 10 is acquired, for example.

Although whether the broadcast show is of a single broadcast is determined based on whether the value of "event_id" has been updated, any other determination condition may be used.

If it is determined in step S265 that a data event (data_event) is designated as the duration range information, the operation moves on to step S267. In step S267, the event determining unit 253 constantly monitors the value of the "data_event_id" contained in the DII transmitted in the DSM-CC section of a data carousel transmission specified by "component_tag", and determines whether the value of the "data_event_id" has been updated.

If it is determined in step S267 that the value of the "data_event_id" has been updated, the operation moves on to step S268, and the linked application being executed is ended.

Specifically, where a data broadcast application indicates the content of a data broadcast to be delivered in one data event, the "data_event_id" distinguishes temporally adjacent data events from each other, and different identification information is allotted to each of adjacent data broadcast applications at the time of transmission. Therefore, when the value of the "data_event_id" is updated, the BML document of the data broadcast application to be delivered next is acquired and executed. In conjunction with that, the linked application being executed is ended.

If it is determined in step S267 that the value of the "data_event_id" has not been updated, the operation returns to step S262, and the procedures thereafter are repeated.

Specifically, if a data event is designated as the duration range information, the linked application is ended when the value of the "data_event_id" is updated, as well as when a result of the determination in step S262, S263, or S264 is "YES". This case may be equivalent to a case where the XML-AIT shown in Fig. 11 is acquired, for example.

Although whether the data broadcast is of a single data broadcast is determined based on whether the value of "data_event_id" has been updated, any other determination condition may be used.

After the procedure of step S268 is completed, the operation returns to step S251, and the procedures thereafter are repeated.

A data broadcast compatible operation is performed in the above described manner.

### (Examples of Screen Transitions)

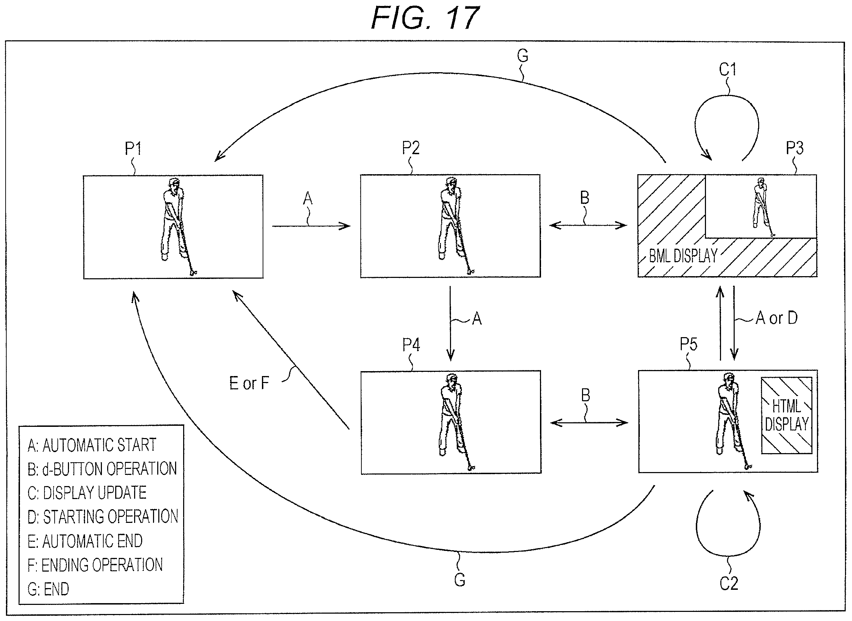

Fig. 17 is a diagram showing specific examples of screen transitions in a case where the data broadcast compatible operation shown in Fig. 16 is performed in the receiving device 20.

As shown in Fig. 17, when a predetermined channel is selected by operating the remote controller 20R or the like in the receiving device 20, a video image P1 of a predetermined broadcast show is displayed on the display 222. Reception of a data broadcast is also automatically started, and the BML browser starts an operation for a data broadcast application formed with a BML document. At this point, a video image P2 of the broadcast show is displayed, but any video image of the data broadcast application is not displayed.

When the d-button of the remote controller 20R is operated, a video image (the "BML display" in the drawing) of the data broadcast application is displayed together with a video image P3 of the broadcast show in a divided display manner. When a predetermined event such as switching of broadcast shows or specific scenes occurs, the displayed content of the data broadcast application is updated in accordance with the event (C1 in the drawing). When the d-button is again operated while the data broadcast application is displayed, the display of the data broadcast application is ended, and only the video image P2 of the broadcast show remains on the display.

When a predetermined ending operation or the like is performed while the video image of the data broadcast application is displayed together with the video image P3 of the broadcast show, the data broadcast application being executed is ended, and only the video image P1 of the broadcast show remains on the display.

In a case where an automatic start of a linked application is set while the video image P2 of the broadcast show is displayed, the BML browser automatically starts a linked application formed with an HTML document. At this point, a video image P4 of the broadcast show is displayed, but any video image of the linked application being executed by the HTML browser is not displayed.

At the time of an automatic start of the linked application, a check is made to determine whether the receiving device 20 has a function to execute linked applications, and whether the receiving device 20 is connectable to the Internet 90. Only when those two conditions are satisfied, is the linked application automatically started. As described above, the linked application is acquired from the application server 40 based on an XML-AIT acquired from the XML-AIT server 30, and is then started.

In a case where an automatic end of the linked application is set while the video image P4 of the broadcast show is displayed, or where a predetermined ending operation is performed, the linked application is ended. As a result, only the video image P1 of the broadcast show remains on the display.

When the d-button is operated while the video image P4 of the broadcast show is displayed, a video image (the "HTML display" in the drawing) of the linked application is displayed in an overlay fashion together with a video image P5 of the broadcast show. Further, when a predetermined event such as switching of specific scenes occurs, the displayed content of the linked application is updated in accordance with the event (C2 in the drawing).

When a predetermined event to end the linked application occurs while the video image of the linked application is displayed together with the video image P5 of the broadcast show, the linked application being executed is ended. Specifically, in a case where no duration range information is designated in the XML-AIT, the linked application being executed is ended when there is an instruction to end the linked application being executed.

In a case where an event is designated as the duration range information, the linked application being executed is automatically ended when the value of the "event_id" is updated, for example. Further, in a case where a data event is designated as the duration range information, the linked application being executed is automatically ended when the value of the "data_event_id" is updated, for example. As a result, the linked application is ended, and only the video image P1 of the broadcast show remains on the display.

In a case where an automatic start is set or a predetermined starting operation is performed while the video image P3 of the broadcast show and the video image (the "BML display" in the drawing) of the data broadcast application are displayed, the video image (the "HTML display" in the drawing) of the linked application is displayed together with the video image P5 of the broadcast show in an overlay fashion. Alternatively, the video image P5 of the broadcast show having the video image of the linked application superimposed thereon may transit to the video image P3 of the broadcast show having the video image of the data broadcast application superimposed thereon.

The above are specific examples of screen transitions in the receiving device 20.

As described above, in the receiving device 20, both a data broadcast application by data broadcasting and a linked application by hybrid broadcasting can be performed in conjunction with a broadcast show.

Also, it is predicted that data broadcasting and hybrid broadcasting will coexist and be used for respective purposes in the future, as described above. Therefore, while broadcasting organizations are expected to add information for realizing both functions of data broadcasting and hybrid broadcasting to broadcast shows, the receiving side is also desired to cope with both functions of data broadcasting and hybrid broadcasting.

In a case where hybrid broadcasting is performed in such circumstances, users are expected to be able to receive data broadcasts and appropriately use the data broadcasts. In a case where the broadcast-communication hybrid system 1 is used in such circumstances, appropriate operations can be readily realized, as the receiving device 20 can execute both data broadcast applications and linked applications.

### (XML-AIT Delivering Operation)

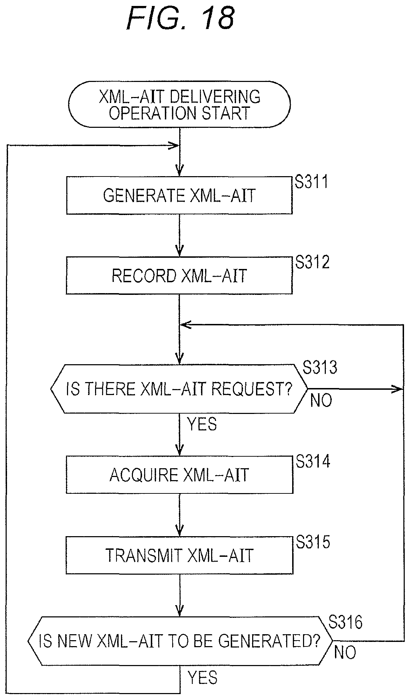

Referring now to the flowchart shown in Fig. 18, an XML-AIT delivering operation to be performed by the XML-AIT server 30 is described.

In step S311, under the control of the control unit 311, the XML-AIT generating unit 312 generates an XML-AIT. In step S312, under the control of the control unit 311, the XML-AIT generating unit 312 records the generated XML-AIT on the recording unit 313.

In step S313, the control unit 311 monitors the communication interface 314, to determine whether there is an XML-AIT request from the receiving device 20. In step S313, upon receipt of a request from the receiving device 20, the operation moves on to step S314.

In step S314, the control unit 311 acquires the XML-AIT from the recording unit 313 in accordance with the request from the receiving device 20. In step S315, under the control of the control unit 311, the communication interface 314 transmits the acquired XML-AIT to the receiving device 20 via the Internet 90.

When the transmitting operation in step S315 is completed, the operation moves on to step S316. In step S316, the control unit 311 determines whether to generate a new XML-AIT.

If it is determined in step S316 that a new XML-AIT is to be generated, the operation returns to step S311, and the procedures of steps S311 and S312 are again carried out. As a result, the XML-AIT generating unit 312 generates a new XML-AIT, and records the new XML-AIT on the recording unit 313.

If it is determined in step S316 that a new XML-AIT is not to be generated, on the other hand, the operation returns to step S313, and the procedures thereafter are repeated. In this case, an XML-AIT is delivered in accordance with a request from the receiving device 20.

An XML-AIT delivering operation is performed in the above described manner.

### <Second Embodiment>

### <Example Structure of a Broadcast-Communication Hybrid System>

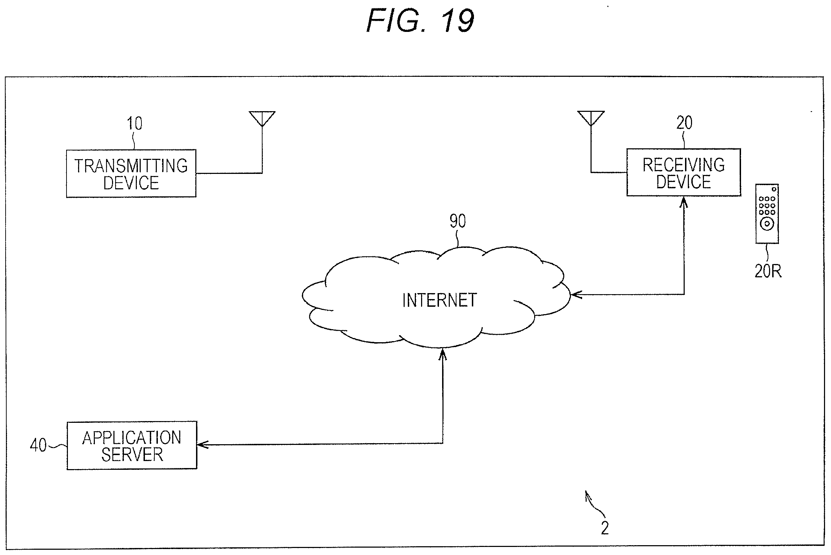

Fig. 19 is a diagram showing an example structure of a broadcast-communication hybrid system 2. This broadcast-communication system 2 includes a transmitting device 10, a receiving device 20, and an application server 40.

That is, the broadcast-communication hybrid system 2 differs from the broadcast-communication hybrid system 1 shown in Fig. 1 in excluding the XML-AIT server 30 from the system. In the broadcast-communication hybrid system 2, the transmitting device 10, instead of the server 30 to provide an XML-AIT, transmits a broadcast signal containing information equivalent to an XML-AIT.

Specifically, the transmitting device 10 generates an AIT, and transmits the AIT as an XML document file by a data carousel transmission. In this case, the XML-AIT is transmitted together with a data broadcast application. The AIT may be transmitted by some other transmission method, and may be transmitted as binary data in an AIT section stream, for example.

The receiving device 20 acquires the AIT transmitted by a data carousel transmission or an AIT section stream or the like. Based on the acquired XML-AIT, the receiving device 20 acquires a linked application set to be automatically executed from the application server 40, for example, and executes the linked application on the spot.

The broadcast-communication hybrid system 2 has the above described structure.

### <XML-AIT Transmission Using Broadcast Waves)>

### (Method of Acquiring a Document and an XML-AIT Transmitted by a Data Carousel)

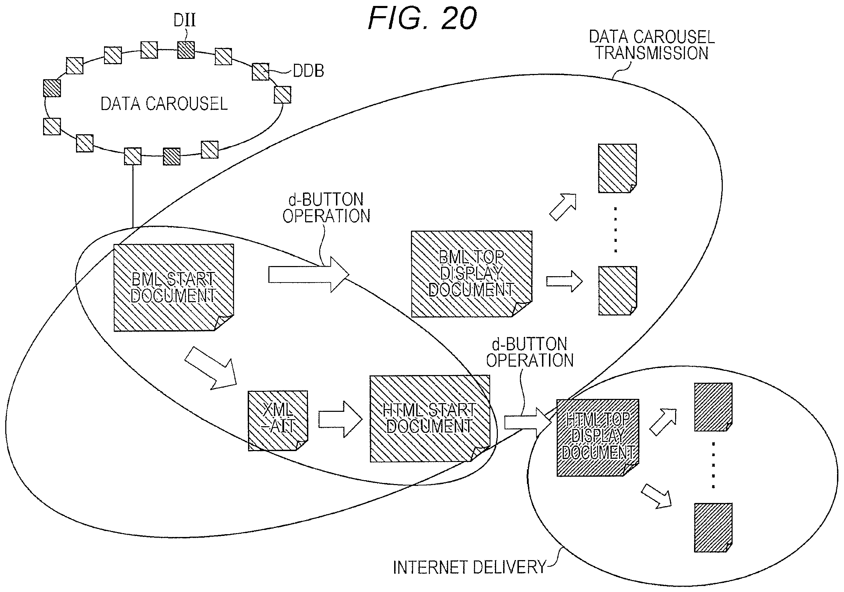

Fig. 20 is a diagram for explaining a method of acquiring a document and an XML-AIT transmitted by a data carousel transmission.

As shown in Fig. 20, in a case where the data broadcasting engine 220 controls the BML browser to execute a data broadcast application, filter setting is performed on the data broadcast processing unit 216 (Fig. 3) so that a DDB message designating "0" as the module ID is acquired.

That is, as the BML start document to be first displayed is transmitted through the module having "0" as the module ID, the module having "0" as the module ID needs to be restructured at the start of a data broadcast application, and such module filter setting is conducted. The module ID "0" is designated by a DII message or predetermined information.

As a result, the BML start document is restored, but a video image of the BML start document is not displayed. When the d-button of the remote controller 20R is operated, a BML top display document is restored, and the top page of the data broadcast application is displayed by the BML browser. When the screen transits to another BML document, module filter setting is conducted so that the module having the module ID and transmitting the BML document at the transition destination is acquired. The corresponding module of the module ID is then acquired, and the BML document at the transition destination is restored. As a result, video images of the data broadcast application are sequentially displayed on the display 222.

In a case where an automatic start of a linked application is set, on the other hand, a linked application start determining operation is performed according to the program written in a BML start document. That is, a check is made to determine whether the receiving device 20 has a function to execute linked applications, and whether the receiving device 20 is connectable to the Internet 90. Only when those two conditions are satisfied, is a linked application automatically started.

If it is determined that a linked application can be started in the start determining operation, an XML-AIT transmitted by a data carousel transmission is acquired. The HTML start document is restored, but any video image of the HTML start document is not displayed. When the d-button of the remote controller 20R is operated, the application server 40 is accessed in accordance with a result of an analysis of the XML-AIT, and an HTML top display document is acquired. As a result, the top page of a linked application is displayed by the HTML browser. When the screen transits to another HTML document, an HTML document is acquired from the application server 40 in the same manner as above.

The above is a method of acquiring a document and an XML-AIT transmitted by data carousel transmissions.

### (Method of Acquiring an AIT and a Linked Application)

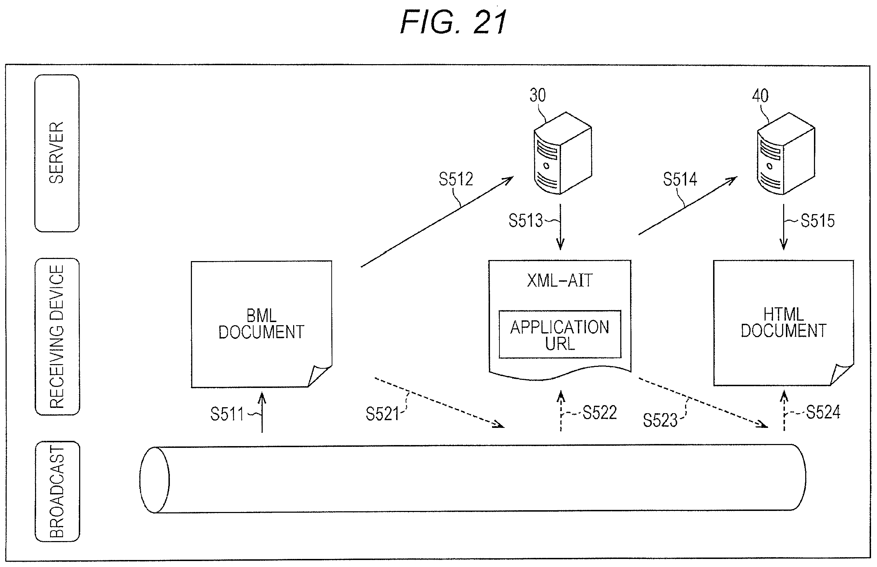

Fig. 21 is a diagram for explaining a method of acquiring an AIT and a linked application.

In Fig. 21, the solid lines represent flows of XML-AIT and linked application acquirements in the first embodiment, and the dashed lines represent flows of XML-AIT and linked application acquirements in the second embodiment.

In the first embodiment, the receiving device 20 acquires a BML document transmitted by a data carousel transmission, and executes a data broadcast application (S511). The receiving device 20 also accesses the XML-AIT server 30 (S512), to acquire an XML-AIT (S513). The receiving device 20 accesses the application server 40 in accordance with a result of an analysis of the XML-AIT (S514), and acquires a linked application formed with an HTML document (S515).

In the second embodiment, on the other hand, the receiving device 20 acquires a BML document transmitted by a data carousel transmission, and executes a data broadcast application (S511). The receiving device 20 also constantly monitors broadcast signals (S521), and acquires an XML-AIT transmitted by a data carousel transmission (S522). The receiving device 20 accesses the application server 40 in accordance with a result of an analysis of the XML-AIT (S514), and acquires a linked application formed with an HTML document (S515).

The receiving device 20 may acquire a linked application transmitted through a broadcast signal by using a data carousel transmission or a FLUTE (File Delivery over Unidirectional Transport) session or the like (S523, S524).

An AIT and a linked application are acquired in the above described manner.

As described above, in this embodiment, a linked application that is executed in conjunction with AV content such as a broadcast show can be provided in hybrid broadcasting. Also, the receiving device 20 can execute both a data broadcast application and a linked application. Thus, an operation using both data broadcasting and hybrid broadcasting can be readily put into practice.

To end a linked application being executed, a program (script) for an ending operation is normally written in an HTML document, for example. However, to put the operation into practice, it is necessary to further add a new program. In this embodiment, on the other hand, existing information transmitted by a broadcast wave, such as "event_id" contained in an EIT p or "data_event_id" contained in a DII, is used to end a linked application being executed in accordance with the duration range information designated by an XML-AIT. Accordingly, there is no need to add a program to the HTML document. Thus, the trouble of adding a program at the time of practice can be eliminated, and control on an end of a linked application can be readily performed.

In the above description, the receiving device 20 has been described as a television receiver. However, the receiving device 20 is not limited to that, and may be any receiver such as a personal computer or a mobile terminal device that can receive broadcast signals transmitted from the transmitting device 10 such as a tablet terminal and can communicate with a server connected to the Internet 90. Also, the receiving device 20 may be designed not to include a display and a speaker, for example, so that the function thereof is included in an electronic device such as a video recorder or a set-top box.

### <Description of a Computer to Which the Present Technology Is Applied>

The above described series of operations can be performed by hardware, and can also be performed by software. Where the series of operations are performed with software, the program that forms the software is installed into a computer. Here, the computer may be a computer incorporated into special-purpose hardware, or may be a general-purpose personal computer that can execute various kinds of functions as various kinds of programs are installed thereinto.

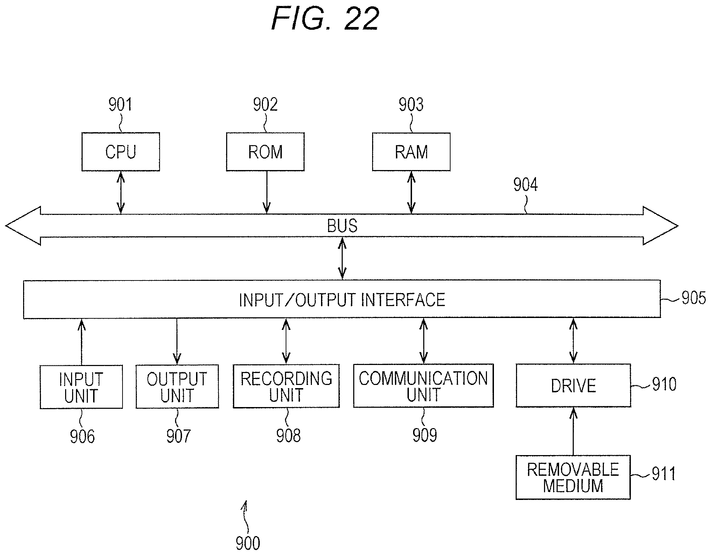

Fig. 22 is a block diagram showing an example structure of the hardware of a computer that performs the above described series of operations in accordance with programs.

In the computer 900, a CPU (Central Processing Unit) 901, a ROM (Read Only Memory) 902, and a RAM (Random Access Memory) 903 are connected to one another by a bus 904.

An input/output interface 905 is further connected to the bus 904. An input unit 906, an output unit 907, a recording unit 908, a communication unit 909, and a drive 910 are connected to the input/output interface 905.

The input unit 906 is formed with a keyboard, a mouse, a microphone, and the like. The output unit 907 is formed with a display, a speaker, and the like. The recording unit 908 is formed with a hard disk, a nonvolatile memory, or the like. The communication unit 909 is formed with a network interface or the like. The drive 910 drives a removable medium 911 such as a magnetic disk, an optical disk, a magnetooptical disk, or a semiconductor memory.

In the computer 900 having the above described structure, the CPU 901 loads a program stored in the recording unit 908 into the RAM 903 via the input/output interface 905 and the bus 904, and executes the program, so that the above described series of operations are performed.

The programs to be executed by the computer 900 (the CPU 901) may be recorded on the removable medium 911 as a packaged medium to be provided, for example. Alternatively, the programs can be provided via a wired or wireless transmission medium such as a local area network, the Internet, or digital satellite broadcasting.

In the computer 900, a program can be installed into the recording unit 908 via the input/output interface 905, as the removable medium 911 is attached to the drive 910. Also, a program can be received by the communication unit 909 via a wired or wireless transmission medium, and be installed into the recording unit 908. Alternatively, programs may be installed into the ROM 902 or the recording unit 908 in advance.

The program to be executed by the computer 900 may be a program for carrying out processes in chronological order in accordance with the sequence described in this specification, or a program for carrying out processes in parallel or whenever necessary such as in response to a call.

In this specification, the processing steps of writing a program for the computer 900 to perform various operations are not necessarily carried out in chronological order in accordance with the sequences written in the flowcharts, and may include operations to be performed in parallel or operations to be performed independently of each other (such as parallel operations or object-based operations).

Also, the program may be executed by a single computer, or may be executed by computers in a dispersive manner. Further, the program may be transferred to a remote computer, and be executed therein.

In this specification, a system means an assembly of components (devices, modules (parts), and the like), and it does not matter whether all the components are placed in one housing. Accordingly, a system may be devices that are housed in different housings and are connected via a network, or a device that has modules housed in one housing.

It should be noted that embodiments of the present technique are not limited to the above described embodiments, and various modifications may be made to them without departing from the scope of the present technique.

For example, the present technology can be in the form of cloud computing that shares and executes one function with other devices via a network.

Each of the steps described with reference to the above described flowcharts may be carried out by one device or may be carried by more than one device.

Further, in a case where more than one operation is included in one step, the operations included in one step may be performed by one device or may be performed by more than one device.

### REFERENCE SIGNS LIST

- 1, 2: Broadcast-communication hybrid system
- 10: Transmitting device
- 20: Receiving device
- 20R: Remote Controller
- 30: XML-AIT server
- 40: Application server
- 90: Internet
- 212: Tuner
- 216: Data broadcast processing unit
- 220: Data broadcasting engine
- 222: Display
- 225: Communication interface
- 234, 234-1, 234-2: Control unit
- 235, 235-1, 235-2: Application engine
- 251: Control information acquiring unit
- 252: Control information analyzing unit
- 253: Event determining unit
- 254: Application control unit
- 311: Control unit
- 312: XML-AIT generating unit
- 314: Communication interface
- 900: Computer
- 901: CPU

## Claims

1. A receiving device (20) comprising:
a receiving unit (237) configured to receive, by a broadcast wave, an audio-video, AV, content, a value of an event identifier comprised in an Event Information Table, EIT, and a value of a data event identifier comprised in a Download Info Indication, DII;
a control information acquiring unit (251) configured to acquire control information for controlling an operation of an application program to be executed in conjunction with the AV content, said control information being comprised in an Application Information Table written in the Extensible Markup Language, XML, format, XML-AIT, and being acquired via a network from a server; and
a control unit (234) configured to end the application program being executed based on duration range information for specifying a range on a time axis, wherein the operation of the application program can be continued in the range,
wherein the duration range information is contained in the control information and specifies an event or a data event and a target data carousel; and
wherein the control unit is configured,
if the duration range information specifies an event, to monitor the value of the event identifier based on a comparison target value of the event identifier acquired at the start of the application program and to end execution of the application program in case the value of the event identifier is updated and,
if the duration range information specifies a data event, to monitor the value of the data event identifier based on a comparison target value of the data event identifier of the target data carousel acquired at the start of the application program and to end execution of the application program in case the value of the data event identifier is updated.

2. The receiving device (20) according to claim 1, wherein the value of the data event identifier is transmitted by a data carousel transmission specified by the duration range information among one or a plurality of data carousel transmissions by the broadcast wave.

3. The receiving device (20) according to any one of the preceding claims, wherein the control unit (234) is configured to cause the application program to be executed when the receiving device has a function to execute the application program.

4. The receiving device (20) according to any one of the preceding claims, wherein the application program is started from a data broadcast application program to be executed in conjunction with the AV content.

5. A receiving method for a receiving device,
the receiving method comprising:
receiving, by a broadcast wave, an audio-video, AV, content, a value of an event identifier comprised in an Event Information Table, EIT, and a value of a data event identifier comprised in a Download Info Indication, DII;
acquiring control information for controlling an operation of an application program to be executed in conjunction with the AV content, said control information being comprised in an Application Information Table written in the Extensible Markup Language, XML, format, XML-AIT, and being acquired via a network from a server; and
ending the application program being executed based on duration range information for specifying a range on a time axis, wherein the operation of the application program can be continued in the range,
the receiving, the acquiring, and the ending being performed by the receiving device (20),
wherein the duration range information is contained in the control information and specifies an event or a data event and a target data carousel; and
wherein,
if the duration range information specifies an event, the value of the event identifier is monitored based on a comparison target value of the event identifier acquired at the start of the application program and the execution of the application program is ended in case the value of the event identifier is updated and,
if the duration range information specifies a data event, the value of the data event identifier is monitored based on a comparison target value of the data event identifier of the target data carousel acquired at the start of the application program and the execution of the application program is ended in case the value of the data event identifier is updated.

6. The receiving method according to claim 5, wherein the value of the data event identifier is transmitted by a data carousel transmission specified by the duration range information among one or a plurality of data carousel transmissions by the broadcast wave.

7. The receiving method according to any one of claims 5 to 6, wherein the control unit (234) is configured to cause the application program to be executed when the receiving device has a function to execute the application program.

8. The receiving method according to any one of claims 5 to 7, wherein the application program is started from a data broadcast application program to be executed in conjunction with the AV content.

9. A transmitting device (30) comprising:
a generating unit (312) configured to generate control information for controlling an operation of an application program to be executed in conjunction with an audio-video, AV, content, a value of an event identifier comprised in an Event Information Table, EIT, and a value of a data event identifier comprised in a Download Info Indication, DII, transmitted by a broadcast wave, the control information being comprised in an Application Information Table written in the Extensible Markup Language, XML, format, XML-AIT, and containing duration range information for specifying a range on a time axis, wherein the operation of the application program can be continued in the range; and
a transmitting unit (314) configured to transmit the control information via a network from a server,
wherein the duration range information specifies an event or a data event and a target data carousel; and
wherein the duration range information is configured
for, if the duration range information specifies an event, monitoring the value of the event identifier based on a comparison target value of the event identifier acquired at the start of the application program and ending execution of the application program in case the value of the event identifier is updated, and
for, if the duration range information specifies a data event, monitoring the value of the data event identifier based on a comparison target value of the data event identifier of the target data carousel acquired at the start of the application program and ending execution of the application program in case the value of the data event identifier is updated.

10. A transmitting method for a transmitting device (30),
the transmitting method comprising:
generating control information for controlling an operation of an application program to be executed in conjunction with an audio-video, AV, content, a value of an event identifier comprised in an Event Information Table, EIT, and a value of a data event identifier comprised in a Download Info Indication, DII, transmitted by a broadcast wave, the control information being comprised in an Application Information Table written in the Extensible Markup Language, XML, format, XML-AIT, and containing duration range information for specifying a range on a time axis, wherein the operation of the application program can be continued in the range; and
transmitting the control information via a network from a server,
the generating and the transmitting being performed by the transmitting device (30),
wherein the duration range information specifies an event or a data event and a target data carousel; and
wherein the duration range information is configured
for, if the duration range information specifies an event, monitoring the value of the event identifier based on a comparison target value of the event identifier acquired at the start of the application program and ending execution of the application program in case the value of the event identifier is updated, and
for, if the duration range information specifies a data event, monitoring the value of the data event identifier based on a comparison target value of the data event identifier of the target data carousel acquired at the start of the application program and ending execution of the application program in case the value of the data event identifier is updated.

11. A program for causing a computer to carry out the steps of the method defined in any one of claims 5 to 8 or 10 when said program is executed by the computer.

12. A television receiver including the receiving device (20) according to any one of claims 1-4.

## Patentansprüche

1. Empfangsvorrichtung (20), welche umfasst:
eine Empfangseinheit (237), die ausgestaltet ist, durch eine Übertragungswelle einen Audio-Video-, AV-, Inhalt, einen Wert einer Ereigniskennung, der in einer Ereignisinformationstabelle, EIT, enthalten ist, und einen Wert einer Datenereigniskennung, der in einer Download Info Indication, DII, enthalten ist, zu empfangen;
eine Steuerinformationserfassungseinheit (251), die ausgestaltet ist, Steuerinformationen zum Steuern eines Betriebs eines in Verbindung mit dem AV-Inhalt auszuführenden Anwendungsprogramms zu erfassen, wobei die Steuerinformationen in einer Anwendungsinformationstabelle enthalten sind, die in einem Extensible Markup Language-, XML-, Format, XML-AIT, geschrieben ist und über ein Netzwerk von einem Server erfasst wird; und
eine Steuereinheit (234), die ausgestaltet ist, das auszuführende Anwendungsprogramm basierend auf Dauerbereichsinformationen zum Spezifizieren eines Bereichs auf einer Zeitachse zu beenden, wobei der Betrieb des Anwendungsprogramms in dem Bereich fortgesetzt werden kann,
wobei die Dauerbereichsinformationen in den Steuerinformationen enthalten sind und ein Ereignis oder ein Datenereignis und ein Zieldatenkarussell spezifizieren; und
wobei die Steuereinheit ausgestaltet ist,
wenn die Dauerbereichsinformationen ein Ereignis spezifizieren, den Wert der Ereigniskennung basierend auf einem Vergleichssollwert der beim Start des Anwendungsprogramms erfassten Ereigniskennung zu überwachen und die Ausführung des Anwendungsprogramms zu beenden, falls der Wert der Ereigniskennung aktualisiert wird, und,
wenn die Dauerbereichsinformationen ein Datenereignis spezifizieren, den Wert der Datenereigniskennung basierend auf einem Vergleichssollwert der Datenereigniskennung des beim Start des Anwendungsprogramms erfassten Zieldatenkarussells zu überwachen und die Ausführung des Anwendungsprogramms zu beenden, falls der Wert der Datenkennung aktualisiert wird.

2. Empfangsvorrichtung (20) nach Anspruch 1, wobei der Wert der Datenereigniskennung durch eine Datenkarussellübertragung übertragen wird, die durch die Dauerbereichsinformationen unter einer oder einer Mehrzahl von Datenkarussellübertragungen durch die Übertragungswelle spezifiziert wird.

3. Empfangsvorrichtung (20) nach einem der vorhergehenden Ansprüche, wobei die Steuereinheit (234) ausgestaltet ist, die Ausführung des Anwendungsprogramms zu veranlassen, wenn die Empfangsvorrichtung eine Funktion zum Ausführen des Anwendungsprogramms aufweist.

4. Empfangsvorrichtung (20) nach einem der vorhergehenden Ansprüche, wobei das Anwendungsprogramm von einem Datenübertragungsanwendungsprogramm gestartet wird, welches in Verbindung mit dem AV-Inhalt auszuführen ist.

5. Empfangsverfahren für eine Empfangsvorrichtung,
wobei das Empfangsverfahren aufweist:
Empfangen von einem Audio-Video-, AV-, Inhalt, einem Wert einer Ereigniskennung, der in einer Ereignisinformationstabelle, EIT, enthalten ist, und einem Wert einer Datenereigniskennung, der in einer Download Info Indication, DII, enthalten ist, durch eine Übertragungswelle;
Erfassen von Steuerinformationen zum Steuern eines Betriebs eines in Verbindung mit dem AV-Inhalt auszuführenden Anwendungsprogramms, wobei die Steuerinformationen in einer Anwendungsinformationstabelle enthalten sind, die in einem Extensible Markup Language-, XML-, Format, XML-AIT, geschrieben ist und über ein Netzwerk von einem Server erfasst wird; und
Beenden des auszuführenden Anwendungsprogramms basierend auf Dauerbereichsinformationen zum Spezifizieren eines Bereichs auf einer Zeitachse, wobei der Betrieb des Anwendungsprogramms in dem Bereich fortgesetzt werden kann,
wobei das Empfangen, Erfassen und das Beenden durch die Empfangsvorrichtung (20) ausgeführt wird,
wobei die Dauerbereichsinformationen in den Steuerinformationen enthalten sind und ein Ereignis oder ein Datenereignis und ein Zieldatenkarussell spezifizieren; und
wobei,
wenn die Dauerbereichsinformationen ein Ereignis spezifizieren, der Wert der Ereigniskennung basierend auf einem Vergleichssollwert der beim Start des Anwendungsprogramms erfassten Ereigniskennung überwacht wird und die Ausführung des Anwendungsprogramms beendet wird, falls der Wert der Ereigniskennung aktualisiert wird, und
wenn die Dauerbereichsinformationen ein Datenereignis spezifizieren, der Wert der Datenereigniskennung basierend auf einem Vergleichssollwert der Datenereigniskennung des beim Start des Anwendungsprogramms erfassten Zieldatenkarussells überwacht wird und die Ausführung des Anwendungsprogramms beendet wird, falls der Wert der Datenkennung aktualisiert wird.

6. Empfangsverfahren nach Anspruch 5, wobei der Wert der Datenereigniskennung durch eine Datenkarussellübertragung übertragen wird, die durch die Dauerbereichsinformationen unter einer oder einer Mehrzahl von Datenkarussellübertragungen durch die Übertragungswelle spezifiziert wird.

7. Empfangsverfahren nach einem der Ansprüche 5 bis 6, wobei die Steuereinheit (234) ausgestaltet ist, die Ausführung des Anwendungsprogramms zu veranlassen, wenn die Empfangsvorrichtung eine Funktion zum Ausführen des Anwendungsprogramms aufweist.

8. Empfangsverfahren nach einem der Ansprüche 5 bis 7, wobei das Anwendungsprogramm von einem Datenübertragungsanwendungsprogramm gestartet wird, welches in Verbindung mit dem AV-Inhalt auszuführen ist.

9. Übertragungsvorrichtung (30), welche umfasst:
eine Erzeugungseinheit (312), die ausgestaltet ist, Steuerinformationen zum Steuern eines Betriebs eines in Verbindung mit einem Audio-Video-, AV-, Inhalt auszuführenden Anwendungsprogramms, einen Wert einer Ereigniskennung, die in einer Ereignisinformationstabelle, EIT, enthalten ist, und einen Wert einer Datenereigniskennung, die in einer Download Info Indication, DII, die durch eine Übertragungswelle übertragen wird, enthalten ist, zu erzeugen, wobei die Steuerinformationen in einer Anwendungsinformationstabelle enthalten sind, die in dem Extensible Markup Language-, XML-, Format, XML-AIT, geschrieben ist und Dauerbereichsinformationen zum Spezifizieren eines Bereichs auf einer Zeitachse enthalten, wobei der Betrieb des Anwendungsprogramms in dem Bereich fortgesetzt werden kann; und
eine Übertragungseinheit (314), die ausgestaltet ist, die Steuerinformationen über ein Netzwerk von einem Server zu übertragen,
wobei die Dauerbereichsinformationen ein Ereignis oder ein Datenereignis und ein Zieldatenkarussell spezifizieren; und
wobei die Dauerbereichsinformationen ausgestaltet sind, dass
wenn die Dauerbereichsinformationen ein Ereignis spezifizieren, der Wert der Ereigniskennung basierend auf einem Vergleichssollwert der beim Start des Anwendungsprogramms erfassten Ereigniskennung überwacht wird und die Ausführung des Anwendungsprogramms beendet wird, falls der Wert der Ereigniskennung aktualisiert wird, und,
wenn die Dauerbereichsinformationen ein Datenereignis spezifizieren, der Wert der Datenereigniskennung basierend auf einem Vergleichssollwert der Datenereigniskennung des beim Start des Anwendungsprogramms erfassten Zieldatenkarussells überwacht wird und die Ausführung des Anwendungsprogramms beendet wird, falls der Wert der Datenkennung aktualisiert wird.

10. Übertragungsverfahren für eine Übertragungsvorrichtung (30),
wobei das Übertragungsverfahren aufweist:
Erzeugen von Steuerinformationen zum Steuern eines Betriebs eines in Verbindung mit einem Audio-Video-, AV-, Inhalt auszuführenden Anwendungsprogramms, einen Wert einer Ereigniskennung, die in einer Ereignisinformationstabelle, EIT, enthalten ist, und einen Wert einer Datenereigniskennung, die in einer Download Info Indication, DII, die durch eine Übertragungswelle übertragen wird, enthalten ist, wobei die Steuerinformationen in einer Anwendungsinformationstabelle enthalten sind, die in dem Extensible Markup Language-, XML-, Format, XML-AIT, geschrieben ist und Dauerbereichsinformationen zum Spezifizieren eines Bereichs auf einer Zeitachse enthalten, wobei der Betrieb des Anwendungsprogramms in dem Bereich fortgesetzt werden kann; und
Übertragen der Steuerinformationen über ein Netzwerk von einem Server,
wobei das Erzeugen und Übertragen durch die Übertragungsvorrichtung (30) ausgeführt wird,
wobei die Dauerbereichsinformationen ein Ereignis oder ein Datenereignis und ein Zieldatenkarussell spezifizieren; und
wobei die Dauerbereichsinformationen ausgestaltet sind, dass
wenn die Dauerbereichsinformationen ein Ereignis spezifizieren, der Wert der Ereigniskennung basierend auf einem Vergleichssollwert der beim Start des Anwendungsprogramms erfassten Ereigniskennung überwacht wird und die Ausführung des Anwendungsprogramms beendet wird, falls der Wert der Ereigniskennung aktualisiert wird, und
wenn die Dauerbereichsinformationen ein Datenereignis spezifizieren, der Wert der Datenereigniskennung basierend auf einem Vergleichssollwert der Datenereigniskennung des beim Start des Anwendungsprogramms erfassten Zieldatenkarussells überwacht wird und die Ausführung des Anwendungsprogramms beendet wird, falls der Wert der Datenkennung aktualisiert wird.

11. Programm, welches einen Computer veranlasst, die Schritte des Verfahrens, welches in einem der Ansprüche 5 bis 8 oder 10 definiert ist, auszuführen, wenn das Programm durch den Computer ausgeführt wird.

12. Fernsehempfänger mit der Empfangsvorrichtung (20) nach einem der Ansprüche 1-4.

## Revendications

1. Dispositif de réception (20) comprenant :
une unité de réception (237) configurée pour recevoir, au moyen d'une onde de diffusion, un contenu audio-vidéo (AV), une valeur d'un identifiant d'événement inclus dans une table d'informations d'événement (EIT) et une valeur d'un identifiant d'événement de données inclus dans une indication d'informations de téléchargement (DII) ;
une unité d'acquisition d'informations de commande (251) configurée pour acquérir des informations de commande pour commander une opération d'un programme d'application qui doit être exécuté conjointement avec le contenu audio-vidéo, lesdites informations de commande étant incluses dans une table d'informations d'application écrite dans le format de langage de balisage extensible (XML) (XML-AIT) et étant acquises par le biais d'un réseau à partir d'un serveur ; et
une unité de commande (234) configurée pour mettre fin au programme d'application qui est exécuté en se basant sur des informations de plage de durée pour spécifier une plage sur un axe des temps, dans lequel l'opération du programme d'application peut être continuée dans la plage,
dans lequel les informations de plage de durée sont contenues dans les informations de commande et spécifient un événement ou un événement de données et un carrousel de données cible ; et
dans lequel l'unité de commande est configurée
si les informations de plage de durée spécifient un événement, pour surveiller la valeur de l'identifiant d'événement en se basant sur une valeur cible de comparaison de l'identifiant d'événement acquise au début du programme d'application et pour mettre fin à l'exécution du programme d'application dans le cas où la valeur de l'identifiant d'événement est mise à jour et
si les informations de plage de durée spécifient un événement de données, pour surveiller la valeur de l'identifiant d'événement de données en se basant sur une valeur cible de comparaison de l'identifiant d'événement de données du carrousel de données cible acquise au début du programme d'application et pour mettre fin à l'exécution du programme d'application dans le cas où la valeur de l'identifiant d'événement de données est mise à jour.

2. Dispositif de réception (20) selon la revendication 1, dans lequel la valeur de l'identifiant d'événement de données est transmise au moyen d'une transmission de carrousel de données spécifiée par les informations de plage de durée parmi une transmission de carrousel de données ou une pluralité de transmissions de carrousel de données au moyen de l'onde de diffusion.

3. Dispositif de réception (20) selon l'une quelconque des revendications précédentes, dans lequel l'unité de commande (234) est configurée pour contraindre le programme d'application à être exécuté lorsque le dispositif de réception possède une fonction pour exécuter le programme d'application.

4. Dispositif de réception (20) selon l'une quelconque des revendications précédentes, dans lequel le programme d'application est démarré à partir d'un programme d'application de diffusion de données qui doit être exécuté conjointement avec le contenu audio-vidéo.

5. Procédé de réception pour un dispositif de réception,
le procédé de réception consistant :
à recevoir, au moyen d'une onde de diffusion, un contenu audio-vidéo (AV), une valeur d'un identifiant d'événement inclus dans une table d'informations d'événement (EIT) et une valeur d'un identifiant d'événement de données inclus dans une indication d'informations de téléchargement (DII) ;
à acquérir des informations de commande pour commander une opération d'un programme d'application qui doit être exécuté conjointement avec le contenu audio-vidéo, lesdites informations de commande étant incluses dans une table d'informations d'application écrite dans le format de langage de balisage extensible (XML) (XML-AIT) et étant acquises par le biais d'un réseau à partir d'un serveur ; et
à mettre fin au programme d'application qui est exécuté en se basant sur des informations de plage de durée pour spécifier une plage sur un axe des temps, dans lequel l'opération du programme d'application peut être continuée dans la plage,
la réception, l'acquisition et le fait de mettre fin étant réalisés par le dispositif de réception (20),
dans lequel les informations de plage de durée sont contenues dans les informations de commande et spécifient un événement ou un événement de données et un carrousel de données cible ; et
dans lequel
si les informations de plage de durée spécifient un événement, à surveiller la valeur de l'identifiant d'événement en se basant sur une valeur cible de comparaison de l'identifiant d'événement acquise au début du programme d'application et à mettre fin à l'exécution du programme d'application dans le cas où la valeur de l'identifiant d'événement est mise à jour et
si les informations de plage de durée spécifient un événement de données, à surveiller la valeur de l'identifiant d'événement de données en se basant sur une valeur cible de comparaison de l'identifiant d'événement de données du carrousel de données cible acquise au début du programme d'application et à mettre fin à l'exécution du programme d'application dans le cas où la valeur de l'identifiant d'événement de données est mise à jour.

6. Procédé de réception selon la revendication 5, dans lequel la valeur de l'identifiant d'événement de données est transmise au moyen d'une transmission de carrousel de données spécifiée par les informations de plage de durée parmi une transmission de carrousel de données ou une pluralité de transmissions de carrousel de données au moyen de l'onde de diffusion.

7. Procédé de réception selon l'une quelconque des revendications 5 et 6, dans lequel l'unité de commande (234) est configurée pour contraindre le programme d'application à être exécuté lorsque le dispositif de réception possède une fonction pour exécuter le programme d'application.

8. Procédé de réception selon l'une quelconque des revendications 5 à 7, dans lequel le programme d'application est démarré à partir d'un programme d'application de diffusion de données qui doit être exécuté conjointement avec le contenu audio-vidéo.

9. Dispositif de transmission (30) comprenant :
une unité de génération (312) configurée pour générer des informations de commande pour commander une opération d'un programme d'application qui doit être exécuté conjointement avec un contenu audio-vidéo (AV), une valeur d'un identifiant d'événement inclus dans une table d'informations d'événement (EIT) et une valeur d'un identifiant d'événement de données inclus dans une indication d'informations de téléchargement (DII), transmises par une onde de diffusion, les informations de commande étant incluses dans une table d'informations d'application écrite dans le format de langage de balisage extensible (XML) (XML-AIT) et contenant des informations de plage de durée pour spécifier une plage sur un axe des temps, dans lequel l'opération du programme d'application peut être continuée dans la plage ; et
une unité de transmission (314) configurée pour transmettre les informations de commande par le biais d'un réseau à partir d'un serveur,
dans lequel les informations de plage de durée spécifient un événement ou un événement de données et un carrousel de données cible ; et
dans lequel les informations de plage de durée sont configurées
si les informations de plage de durée spécifient un événement, pour surveiller la valeur de l'identifiant d'événement en se basant sur une valeur cible de comparaison de l'identifiant d'événement acquise au début du programme d'application et pour mettre fin à l'exécution du programme d'application dans le cas où la valeur de l'identifiant d'événement est mise à jour et
si les informations de plage de durée spécifient un événement de données, pour surveiller la valeur de l'identifiant d'événement de données en se basant sur une valeur cible de comparaison de l'identifiant d'événement de données du carrousel de données cible acquise au début du programme d'application et pour mettre fin à l'exécution du programme d'application dans le cas où la valeur de l'identifiant d'événement de données est mise à jour.

10. Procédé de transmission pour un dispositif de transmission (30),
le procédé de transmission consistant :
à générer des informations de commande pour commander une opération d'un programme d'application qui doit être exécuté conjointement avec un contenu audio-vidéo (AV), une valeur d'un identifiant d'événement inclus dans une table d'informations d'événement (EIT) et une valeur d'un identifiant d'événement de données inclus dans une indication d'informations de téléchargement (DII), transmises par une onde de diffusion, les informations de commande étant incluses dans une table d'informations d'application écrite dans le format de langage de balisage extensible (XML) (XML-AIT) et contenant des informations de plage de durée pour spécifier une plage sur un axe des temps, dans lequel l'opération du programme d'application peut être continuée dans la plage ; et
à transmettre les informations de commande par le biais d'un réseau à partir d'un serveur,
la génération et la transmission étant réalisées par le dispositif de transmission (30),
dans lequel les informations de plage de durée spécifient un événement ou un événement de données et un carrousel de données cible ; et
dans lequel les informations de plage de durée sont configurées
si les informations de plage de durée spécifient un événement, pour surveiller la valeur de l'identifiant d'événement en se basant sur une valeur cible de comparaison de l'identifiant d'événement acquise au début du programme d'application et pour mettre fin à l'exécution du programme d'application dans le cas où la valeur de l'identifiant d'événement est mise à jour et
si les informations de plage de durée spécifient un événement de données, pour surveiller la valeur de l'identifiant d'événement de données en se basant sur une valeur cible de comparaison de l'identifiant d'événement de données du carrousel de données cible acquise au début du programme d'application et pour mettre fin à l'exécution du programme d'application dans le cas où la valeur de l'identifiant d'événement de données est mise à jour.

11. Programme pour contraindre un ordinateur à mettre en oeuvre les étapes du procédé défini dans l'une quelconque des revendications 5 à 8 ou 10 lorsque ledit programme est exécuté par l'ordinateur.

12. Récepteur de télévision comprenant le dispositif de réception (20) selon l'une quelconque des revendications 1 à 4.
